# EUROPEAN PATENT SPECIFICATION

(11) **EP 3 916 077 B1**
(45) Date of publication and mention of the grant of the patent: **14.08.2024**
(21) Application number: 19910925.7
(22) Date of filing: 29.11.2019
(51) Int. Cl.: C12M 1/00, C12M 1/34, G01N 35/00, G01N 35/04

(54) **FULLY AUTOMATIC MICROORGANISM IDENTIFICATION AND DRUG SENSITIVITY ANALYSIS SYSTEM**
VOLLAUTOMATISCHES SYSTEM ZUR IDENTIFIZIERUNG VON MIKROORGANISMEN UND ANALYSE VON WIRKSTOFFSENSITIVITÄT
SYSTÈME D'IDENTIFICATION DE MICRO-ORGANISMES ENTIÈREMENT AUTOMATIQUE ET D'ANALYSE DE SENSIBILITÉ AUX MÉDICAMENTS

(30) Priority: 23.01.2019 CN 201910063860
(43) Date of publication of application: 01.12.2021
(73) Proprietor: Autobio Labtec Instruments Co., Ltd., Zhengzhou, Henan 450016 (CN)
(72) Inventor: ZHENG, Yehuan, Zhengzhou, Henan 450016 (CN); XU, Zhen, Zhengzhou, Henan 450016 (CN); YU, Feng, Zhengzhou, Henan 450016 (CN); LIU, Cong, Zhengzhou, Henan 450016 (CN); JI, Hongchao, Zhengzhou, Henan 450016 (CN); DUAN, Lizheng, Zhengzhou, Henan 450016 (CN); YI, Shoupu, Zhengzhou, Henan 450016 (CN); WU, Xiaorui, Zhengzhou, Henan 450016 (CN)
(74) Representative: Gulde & Partner
(86) International application number: PCT/CN2019/121894
(87) International publication number: WO 2020/151368

(56) References cited:
- CN-A- 106 442 985
- CN-A- 106 596 992
- CN-A- 106 596 992
- CN-A- 107 828 648
- CN-A- 108 998 370
- CN-A- 109 722 379
- CN-U- 205 839 023
- CN-U- 206 476 988
- CN-U- 206 476 988
- CN-U- 206 479 546
- CN-U- 209 722 106

## Description

### TECHNICAL FIELD

The present invention relates to the field of microbial testing, and in particular to a fully automatic microorganism identification and drug sensitivity analysis system.

### BACKGROUND

As being highly effective in the treatment of bacterial infections, antibacterial agents have become the most commonly used drugs in clinical practice, and are widely prescribed by doctors. However, the misuse and overuse of antibiotics has become a common problem in recent years, resulting in not only reduced efficacy, but also accelerating the bacterial resistance due to the great toxic and adverse effects of the antibiotics, consequently causing the patients to lose the opportunities of treatment and rescue, threatening the successful treatment of the patient, while causing harm to the patient's health and life. The culture of various bacteria and microorganisms requires different temperatures, humidity and other environmental factors, so it is typically necessary to manually create the required environment to carry out molecular biology and bacterial culture. In the event that too many types of bacteria and microorganisms need to be cultured, the medical staff will have an increased workload and thus are more prone to errors during operation, which causes much inconvenience to the medical staff.

With the continuous advancements in science and technology, people are posing higher and higher requirements for the degree of automation of medical testing equipment. Existing instruments for microorganism identification and drug sensitivity analysis, however, typically only have the functions of incubation and analysis, with a low degree of automation, where sample addition and microplate transfer need to be conducted manually outside the instrument before the microplate is placed into the instrument for incubation and analysis. In this case, the instrument processes a small volume of samples at one time, but involves many manual operations, resulting in a heavy workload for the operator while posing great unforeseen risks. The existing instrument is far from being able to meet the growing demand for microbial testing; therefore, it is highly desirable to develop a microorganism identification and drug sensitivity analysis instrument featuring high degree of automation, simple operation and large-number sample processing.

Conventional microorganism identification and drug sensitivity analysis systems are disclosed in CN 206 476 988 U.

### SUMMARY

A purpose of the present invention is to provide a fully automatic microorganism identification and drug sensitivity analysis system that features simple operation and large-volume sample processing.

The present invention is directed to subject matter as defined in the appended set of claims.

The sample addition unit may include a support frame provided in the whole housing and a back plate fixed longitudinally between two posts on a rear side of the support frame; an X-axis synchronous belt transmission mechanism driven by an X-axis motor may be horizontally provided on a rear side of the back plate; a synchronous belt of the X-axis synchronous belt transmission mechanism may be fixedly connected to a cantilever arm extending horizontally forward; a Y-axis synchronous belt transmission mechanism driven by a Y-axis motor may be horizontally provided on the cantilever arm; a synchronous belt of the Y-axis synchronous belt transmission mechanism may be fixedly connected to a sample addition arm extending vertically downward; a Z-axis synchronous belt transmission mechanism driven by a Z-axis motor may be longitudinally provided on the sample addition arm; a synchronous belt of the Z-axis synchronous belt transmission mechanism may be fixedly connected to a pipette with an aspiration port extending vertically downward; a microplate supporting device and a pipette tip mounting/dismounting device may be provided under a movement track of the sample addition arm.

The pipette may include an aspiration pump motor fixed on the synchronous belt of the Z-axis synchronous belt transmission mechanism; a working shaft of the aspiration pump motor may be vertically downward, and a synchronously rotating drive guide screw may be fixedly connected to a lower end of the working shaft through a coupling; the drive guide screw may be provided with a guide screw nut moving vertically along a length direction of the drive guide screw; a piston-type aspiration pump pipette fixedly connected to a housing of the aspiration pump motor may be provided vertically downward under the drive guide screw; a piston rod on an upper end of the piston-type aspiration pump pipette may be fixedly connected to the drive screw nut, and a disposable pipette tip located in a pipette tip accommodating box may be movably clamped to the aspiration port at a lower end of the piston-type aspiration pump pipette;
the microplate supporting device may include a supporting base; a rotating spindle driven by a base plate driving motor may vertically penetrate the supporting base; an upper end of the rotating spindle may be fixedly connected to the center of a bottom surface of a supporting base plate arranged horizontally; two microplate supporting assemblies may be fixed side by side on the supporting base plate; each microplate supporting assembly may include a set of microplate supporting racks and a set of microplate cover clamping racks; the height of the microplate cover clamping rack may be greater than that of the microplate supporting rack; the microplate supporting racks and the microplate cover clamping racks of each of the two microplate supporting assemblies may be staggered;
the pipette tip mounting/dismounting device may include a waste pipette tip bin provided on a front side of the microplate supporting device; a waste pipette tip storage box drawn out or put in from a front side of the whole housing may be provided in the waste pipette tip bin; a pipette tip dropping opening may be provided on a top wall of the waste pipette tip bin; a support table having an upper surface provided with the pipette tip accommodating box may be provided above the pipette tip dropping opening; the support table may be provided with a gourd-shaped pipette tip removal opening corresponding to the pipette tip dropping opening.

The sample identification and recording unit may include a sample support base provided under the movement track of the sample addition arm; a sample tray rotating shaft driven by an identification and recording unit motor may vertically penetrate the sample support base; a sample bottle tray connecting plate may be horizontally fixedly connected to an upper end of the sample tray rotating shaft; an annular tray may be movably placed on the sample bottle tray connecting plate; a plurality of clamping grooves for inserting sample bottles may be evenly distributed on a circumference of the annular tray; a product manufacturing barcode and a patient information barcode may be pasted on inner side wall of the sample bottle facing to the sample tray rotating shaft and outer side wall of the sample bottle facing to the outer side of the annular tray, respectively; barcode scanners corresponding to positions of the product manufacturing barcode and the patient information barcode on any sample bottle may be fixedly provided inside and outside the annular tray on the sample support base, respectively; an annular code disc may be fixedly connected to a lower surface of the sample bottle tray connecting plate; the sample support base located on one side of the annular code disc may be provided with a code disc origin position sensor and a code disc scale position sensor.

The microplate carrying unit may include a fixed base provided on one side of the microplate supporting device; the fixed base may be fixedly connected to a microplate release mechanism through a pair of longitudinal support plates arranged at intervals;
the microplate release mechanism may include a bottom cover fixed horizontally on the two longitudinal support plates; the bottom cover may be provided with a microplate release opening; an openable/closable plate with a rectangular ring structure may be movably clamped to an upper edge of the microplate release opening through a guide pin fixed on the bottom cover; the openable/closable plate may be formed by butting a pair of U-shaped thin plates moving toward each other in opposite directions; Abutting joints of the two U-shaped thin plates may be connected to form a single unit through a rotating sleeve; a set of clamping claws may be symmetrically provided on opposite sides of bottom-wall thin plates of the two U-shaped thin plates; one of the U-shaped thin plates may be provided with a return spring having an outer end connected to the bottom cover; a stretching direction of the return spring may be consistent with an opening/closing direction of the U-shaped thin plate; a microplate release motor may be fixed on a lower surface of the bottom cover; a microplate release leadscrew may be coaxially fixed on a working shaft of the microplate release motor; an axial direction of the microplate release leadscrew may be consistent with the opening/closing direction of the two U-shaped thin plates; the microplate release leadscrew may be provided with a nut seat used for driving the two U-shaped thin plates to open and close; a pair of stroke position sensors for monitoring a movement stroke of the nut seat may be arranged at intervals on the microplate release motor; a connection base fixedly connected to the bottom cover may be fastened above the two U-shaped thin plates; the connection base may be provided with a microplate dropping opening corresponding to the microplate release opening; a U-shaped through slot corresponding to the position of the information barcode on the microplate may be provided on one side of the microplate dropping opening;
a microplate stacking mechanism may be provided on the microplate release mechanism; the microplate stacking mechanism may include retaining posts vertically fixed at four corners of the microplate dropping opening; upper ends of the retaining posts may be connected to form a single unit by a connecting top plate to define a microplate stacking bin adapted to the microplate; a magnetic attraction door with a handle may be hinged on one side of the microplate stacking bin; a Hall sensor may be installed on the retaining post that may be attracted to the magnetic attraction door.

The incubation unit may include an incubator provided on one side of the sample addition unit; an incubation base may be provided in the incubator; a thin-walled bearing may be horizontally provided on an upper surface of the incubation base; an inner ring of the thin-walled bearing may be fixedly connected to the incubation base, and a driven pulley driven by an incubation motor may be fixedly sleeved on an outer ring of the thin-walled bearing; an upper surface of the driven pulley may be fixedly connected to a horizontal incubation tray that may be coaxially arranged; a plurality of incubation shelves with outward openings may be evenly distributed along a circumferential direction of the horizontal incubation tray; a plurality of layers of microplate clamping grooves may be longitudinally arranged at intervals in the incubation shelf; each incubation shelf may be fixed on an upper surface of the horizontal incubation tray by a pin;
a microplate inlet and a microplate outlet may be provided on side walls of the incubator; the microplate inlet may be composed of a plurality of inlet door openings longitudinally arranged at intervals; the inlet door openings may be in a one-to-one correspondence with the microplate clamping grooves; the inlet door opening may be hinged to a push door through an automatic rebound hinge; the microplate outlet may be in sealed communication with a front side wall of the whole housing; the size of the microplate outlet may be adapted to that of the outward opening of the incubation shelf; the front side wall of the whole housing corresponding to the microplate outlet may be hinged to an incubator door; a heating fan with a heating wire may be provided on a top wall of the incubator; a temperature sensor may be provided in the incubator; an incubation information display screen may be provided on the front side wall of the whole housing under the incubator door.

The incubation base may be provided with a transmission; the transmission may be fixedly connected to a lower surface of the incubation base through a fixing plate; an output end of the transmission may extend vertically upward to a place above the incubation base, and a driving pulley may be provided on the output end of the transmission; the driving pulley may be drivingly connected to the driven pulley through a transmission belt; an input end of the transmission may be drivingly connected to the incubation motor through a synchronous transmission mechanism; a plurality of incubation information indicator lights may be provided on an edge of the microplate outlet corresponding to an opening side of the incubator door; the incubation information indicator lights may be in a one-to-one correspondence with the microplate clamping grooves in the incubation shelf.

The testing unit may include a testing base provided at a central position on an inner side of the incubation shelves; a first guide rail may be longitudinally provided on the testing base; an information acquisition mechanism driven by a first power mechanism to ascend and descend may be slidably provided on the first guide rail; a counterweight mechanism may be provided on the testing base to prevent the information acquisition mechanism from falling;
the information acquisition mechanism may include a horizontal lifting frame slidably provided on the first guide rail; a second guide rail may be horizontally provided in the horizontal lifting frame, and may be close to a long side wall of the horizontal lifting frame; a slider driven by a second power mechanism may be slidably provided on the second guide rail; a tray connecting block may be horizontally fixedly connected to one side of the slider; a testing tray may be fixedly connected to a side of the tray connecting block away from the slider; the testing tray may pass through a tray access opening on a short side wall of the horizontal lifting frame; an optical fiber fixing block may be provided at a lower edge of the tray access opening; a light-emitting diode (LED) lamp may be provided at the bottom of the horizontal lifting frame; light-emitting diode (LED) lamp may be irradiated on the testing tray through an optical fiber via the optical fiber fixing block; a photoelectric signal conversion module may cover the top of the horizontal lifting frame.

The counterweight mechanism may include an inverted U-shaped frame longitudinally provided on the testing base; the first guide rail and the information acquisition mechanism may be located inside the inverted U-shaped frame; a third guide rail may be longitudinally provided on the testing base on a rear side of the inverted U-shaped frame; a hanging shaft located above the photoelectric signal conversion module may be provided on the horizontal lifting frame; the hanging shaft may be horizontally provided along a width direction of the inverted U-shaped frame; a steel cable with one end fixed on the hanging shaft may go around a fixed pulley on the top of the inverted U-shaped frame, and may be fixedly connected to a counterweight slidably provided on the third guide rail.

The microplate transfer unit may include a longitudinal base plate attached and fixed on a front side of the back plate; a transverse transmission belt driven by a transverse driving motor may be horizontally provided on a front side of the longitudinal base plate; a plurality of arm plate position sensors may be arranged at intervals, along a length direction of the longitudinal base plate, on the longitudinal base plate located below the transverse transmission belt; a conveying end of the transverse transmission belt may be adapted and correspond to the microplate inlet of the incubator; a longitudinal arm plate may be fixed to the transverse transmission belt;
a longitudinal driving motor may be provided on one end of the longitudinal arm plate; an end of a working shaft of the longitudinal driving motor may be connected to a synchronously rotating leadscrew located on a front side of the longitudinal arm plate through a coupling; an axial direction of the synchronously rotating leadscrew may be consistent with a length direction of the longitudinal arm plate; the synchronously rotating leadscrew may be provided with a leadscrew nut sliding vertically; a height positioning plate in a direction consistent with a length direction of the synchronously rotating leadscrew may be provided on the longitudinal arm plate; the leadscrew nut may be provided with a microplate transfer support bracket and a nut position sensor that may be adapted to the height positioning plate;
the microplate transfer support bracket may include a microplate transfer cantilever arm that may be fixedly connected to the leadscrew nut and extends horizontally forward; a microplate transfer bracket matching the inlet door opening may be fixed horizontally on the microplate transfer cantilever arm; a bracket in-position sensor may be provided on a side of the microplate transfer bracket.

The present invention has the advantages of simple and convenient operation, large-volume sample processing and high degree of automation. In the present invention, a sample addition unit, a sample identification and recording unit, a microplate carrying unit, an incubation unit, a testing unit and a microplate transfer unit are provided in the internal chamber of the whole housing. These units carry out a series of operations, including scanning, recording and automatic selection of the sample before addition, automatic mounting of the disposable pipette tip before aspiration by the pipette, automatic loading of the microplate, aspiration and addition by the pipette, dismounting of the disposable pipette tip after addition, automatic transfer of the microplate after addition, incubation of the microplate and microorganism identification and drug sensitivity testing to the microplate after being incubated. The present invention can add the samples in a large volume at one time, which meets the ever-increasing testing demand and the development demand of the microbial susceptibility testing industry. The present invention realizes fully enclosed automatic operation of sample addition, microplate transfer, incubation and interpretation, which improves work efficiency, reduces manual intervention, truly realizes the goal of 24-hours unattended operation, and effectively avoids risks caused by manual intervention. In addition, the present invention adopts an overall modular design, which makes it possible for each module to be disassembled separately and facilitates later maintenance.

### BRIEF DESCRIPTION OF THE DRAWINGS

FIG. 1 is a schematic structural diagram of the present invention.
FIG. 2 is a top view of FIG. 1, where a whole housing is omitted.
FIG. 3 is schematic diagram of an internal structure of FIG. 1, where the whole housing and an incubator are omitted.
FIGS. 4 and 5 are schematic structural diagrams of a sample addition unit shown in FIG. 1.
FIG. 6 is an enlarged view of a pipette of the sample addition unit shown in FIG. 1.
FIG. 7 is a schematic structural diagram of a microplate supporting device shown in FIG. 1.
FIG. 8 is a schematic structural diagram of a sample identification and recording unit shown in FIG. 1.
FIG. 9 is a stereoscopic view of FIG. 8.
FIG. 10 is an exploded view of a microplate carrying unit shown in FIG. 1.
FIG. 11 is an enlarged view of a microplate release mechanism shown in FIG. 10.
FIG. 12 is an enlarged view of a microplate shown in FIG. 10.
FIG. 13 is a schematic structural diagram of an incubation unit shown in FIG. 1.
FIG. 14 is a schematic structural diagram of FIG. 13, where the incubator is omitted.
FIG. 15 is a schematic structural diagram of a testing unit shown in FIG. 1.
FIG. 16 is a stereoscopic view of FIG. 15.
FIG. 17 is a schematic structural diagram of an information acquisition mechanism shown in FIG. 15, where a second power mechanism is omitted.
FIG. 18 is a schematic structural diagram of a microplate transfer unit shown in FIG. 1.
FIG. 19 is an enlarged view of a microplate transfer support bracket shown in FIG. 18, where the microplate is omitted.

### DETAILED DESCRIPTION OF THE EMBODIMENTS

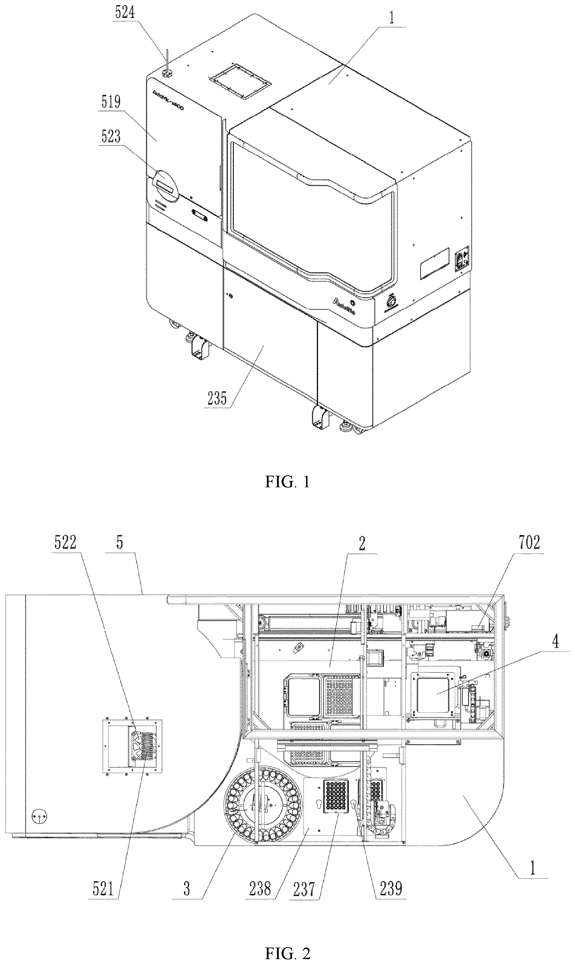

The present invention provides a fully automatic microorganism identification and drug sensitivity analysis system. As shown in FIGS. 1 to 3, the system includes a whole housing 1. A sample addition unit 2, a sample identification and recording unit 3, a microplate carrying unit 4, an incubation unit 5, a testing unit 6 and a microplate transfer unit 7 are provided in an internal chamber of the whole housing 1. The sample addition unit 2, the sample identification and recording unit 3, the microplate carrying unit 4, the incubation unit 5, the testing unit 6 and the microplate transfer unit 7 are all separately controlled by a programmable logic controller (PLC).

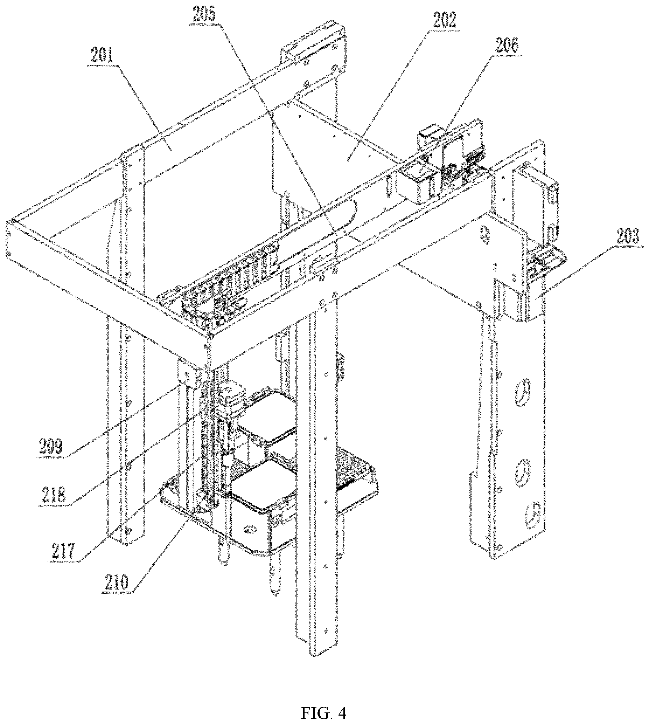

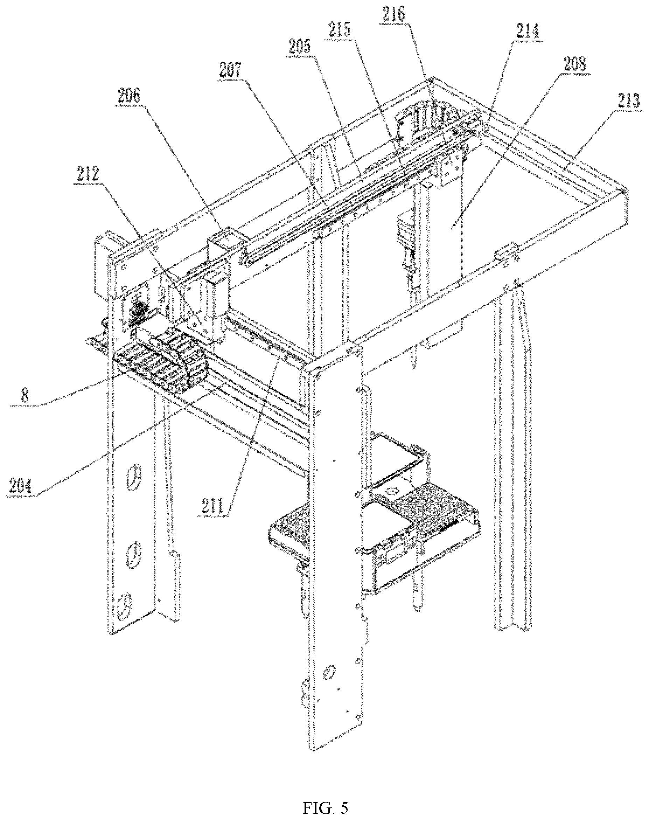

The sample addition unit 2 automatically carries out the mounting/dismounting of a pipette tip, the aspiration of a pipette body and the sample addition on a microplate. As shown in FIGS. 4 and 5, the sample addition unit 2 includes a support frame 201 provided in the whole housing 1. The support frame 201 consists of four longitudinal posts fixed on an inner bottom wall of the whole housing 1 and a connecting beam fixedly connected to upper ends of the longitudinal posts. A back plate 202 is fixed longitudinally between two posts on a rear side of the support frame 201. An X-axis synchronous belt transmission mechanism 204 driven by an X-axis motor 203 is horizontally provided on a rear side of the back plate 202. A cantilever arm 205 bypassing above the back plate 202 and extending horizontally forward is fixedly connected to a synchronous belt of the X-axis synchronous belt transmission mechanism 204. A Y-axis synchronous belt transmission mechanism 207 driven by a Y-axis motor 206 is horizontally provided on the cantilever arm 205. A sample addition arm 208 extending vertically downward is fixedly connected to a synchronous belt of the Y-axis synchronous belt transmission mechanism 207. A Z-axis synchronous belt transmission mechanism 210 driven by a Z-axis motor 209 is longitudinally provided on the sample addition arm 208. A synchronous belt of the Z-axis synchronous belt transmission mechanism 210 is fixedly connected to a pipette with an aspiration port extending vertically downward. A microplate supporting device and a pipette tip mounting/dismounting device are provided under a movement track of the sample addition arm 208.

The cantilever arm 205 is driven by the X-axis synchronous belt transmission mechanism 204 to move back and forth along an X-axis direction of the support frame 201. The sample addition arm 208 is driven by the Y-axis synchronous belt transmission mechanism 207 to move back and forth along a Y-axis direction of the support frame 201. The pipette is driven by the Z-axis synchronous belt transmission mechanism 210 to move back and forth along a Z-axis direction of the support frame 201. In this way, the pipette is movable in any direction.

In order to ensure that the cantilever arm 205 moves stably with the X-axis synchronous belt transmission mechanism 204, an X-axis guide rail 211 consistent with a length direction of the X-axis synchronous belt transmission mechanism 204 is provided on the back plate 202. The length of the X-axis guide rail 211 is adapted to that of the X-axis synchronous belt transmission mechanism 204. The cantilever arm 205 is fixedly connected to an X-axis slider 212 slidably clamped on the X-axis guide rail 211, such that the X-axis guide rail 211 stably clamps and secures the cantilever arm 205 while guiding the movement of the cantilever arm 205. In addition, since the extension length of the cantilever arm 205 is long, in order to prevent a front end of the cantilever arm 205 from falling, the height of the cantilever arm 205 is set to be the same as that of the connecting beam of the support frame 201, a support slide rail 213 is horizontally provided on an inner side of the connecting beam on a front side of the support frame 201, and a support slider 214 that is slidably fitted with the support slide rail 213 is provided on a front end of the cantilever arm 205, so as to provide a stable support for the front end of the cantilever arm 205.

In order to ensure that the sample addition arm 208 moves stably with the Y-axis synchronous belt transmission mechanism 207, a Y-axis guide rail 215 consistent with a length direction of the Y-axis synchronous belt transmission mechanism 207 is provided on the cantilever arm 205. The length of the Y-axis guide rail 215 is adapted to that of the Y-axis synchronous belt transmission mechanism 207. The sample addition arm 208 is fixedly connected to an Y-axis slider 216 slidably clamped on the Y-axis guide rail 215, such that the Y-axis guide rail 215 stably clamps and secures the sample addition arm 208 while guiding the movement of the sample addition arm 208.

In order to ensure that the pipette moves stably with the Z-axis synchronous belt transmission mechanism 210, a Z-axis guide rail 217 consistent with a length direction of the Z-axis synchronous belt transmission mechanism 210 is provided on the sample addition arm 208. The length of the Z-axis guide rail 217 is adapted to that of the Z-axis synchronous belt transmission mechanism 210. The pipette is fixedly connected to a Z-axis slider 218 slidably clamped on the Z-axis guide rail 217, such that the Z-axis guide rail 217 stably clamps and secures the pipette while guiding the vertical movement of the pipette.

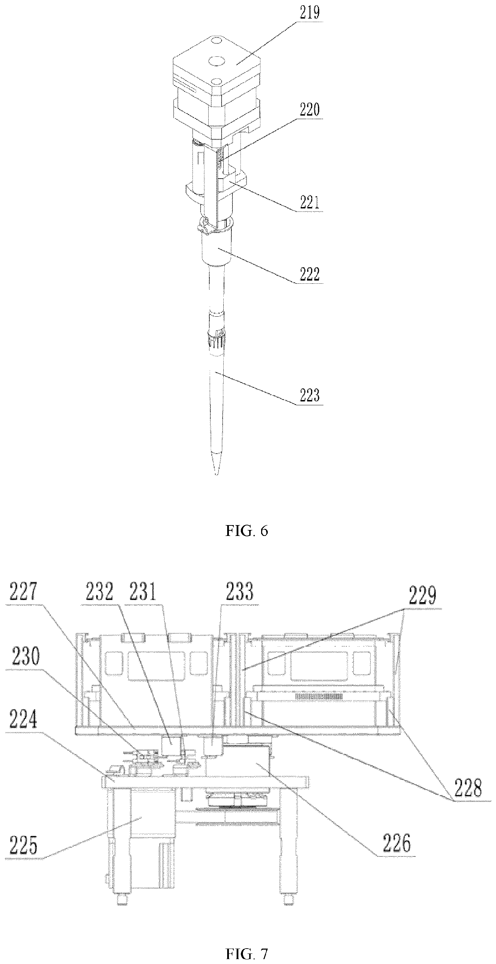

As shown in FIG. 6, the pipette includes an aspiration pump motor 219 fixed on the synchronous belt of the Z-axis synchronous belt transmission mechanism 210. A working shaft of the aspiration pump motor 219 extends vertically downward, and a synchronously rotating drive guide screw 220 is fixedly connected to a lower end of the working shaft through a coupling. The drive guide screw 220 is provided with a guide screw nut 221 moving vertically along a length direction of the drive guide screw 220. A piston-type aspiration pump pipette 222 fixedly connected to a housing of the aspiration pump motor 219 is provided vertically downward under the drive guide screw 220. The piston-type aspiration pump pipette 222 is an existing common automatic pipette, which can realize accurate sample aspiration and addition. A piston rod on an upper end of the piston-type aspiration pump pipette 222 is fixedly connected to the guide screw nut 221. The aspiration pump motor 219 drives the drive guide screw 220 to rotate, such that the guide screw nut 221 on the drive guide screw 220 moves vertically, and the piston rod of the piston-type aspiration pump pipette 222 is pushed and pulled vertically to complete sample aspiration or addition. A disposable pipette tip 223 is movably clamped to the aspiration port at a lower end of the piston-type aspiration pump pipette 222. The disposable pipette tip 223 is detachable and can be replaced to effectively avoid cross-contamination.

The microplate supporting device is generally fixed on the inner bottom wall of the whole housing 1 at the center of the support frame 201. As shown in FIG. 7, the microplate supporting device includes a supporting base 224. A rotating spindle 226 driven by a base plate driving motor 225 vertically penetrates the supporting base 224. In order to make the structure more compact, the base plate driving motor 225 is fixed on a lower surface of the supporting base 224, and the rotating spindle 226 is driven by a synchronous belt transmission mechanism. An upper end of the rotating spindle 226 is fixedly connected to the center of a bottom surface of a supporting base plate 227 arranged horizontally. In order to improve the flexibility and stability of the microplate supporting device during operation, a pair of bearings (preferably deep-groove bearings) is sleeved on the rotating spindle 226 close to the supporting base 224. A shaft sleeve tightly fitted with an outer circumferential surface of the bearing is fixedly provided on the supporting base 224 by a bolt. An external thread is provided on the rotating spindle 226 under the bearing, and the rotating spindle 226 is sequentially provided with a stop washer and a lock nut. Two microplate supporting assemblies are fixed side by side on the supporting base plate 227. Each microplate supporting assembly includes a set of microplate supporting racks 228 and a set of microplate cover clamping racks 229. The height of the microplate cover clamping rack 229 is greater than that of the microplate supporting rack 228, thus, it is convenient to first clamp and fix a microplate cover on the higher microplate cover clamping rack 229 and then remove the microplate downward and clamp it on the microplate supporting rack 228. The microplate supporting racks 228 and the microplate cover clamping racks 229 of each of the two microplate supporting assemblies are staggered, such that there are two stations in the sample addition zone to place two microplates. After the sample addition on the microplate at one station is completed, the base plate driving motor 225 drives the supporting base plate 227 to rotate 180°, and then the sample can be added to the microplate at the other station. This design can effectively save the addition time and improve work efficiency. In addition, an addition origin position sensor 230 and an addition scale position sensor 231 are provided on an upper surface of the supporting base 224. A lower surface of a supporting base plate 227 is provided with an origin position stopper 232 adapted to the addition origin position sensor 230 and a scale position stopper 233 adapted to the addition scale position sensor 231. The addition origin position sensor 230 cooperates with the origin position stopper 232, and the addition scale position sensor 231 cooperates with the scale position stopper 233 to identify and record the position of the microplate in real time and realize position memory, so as to facilitate automatic sample addition.

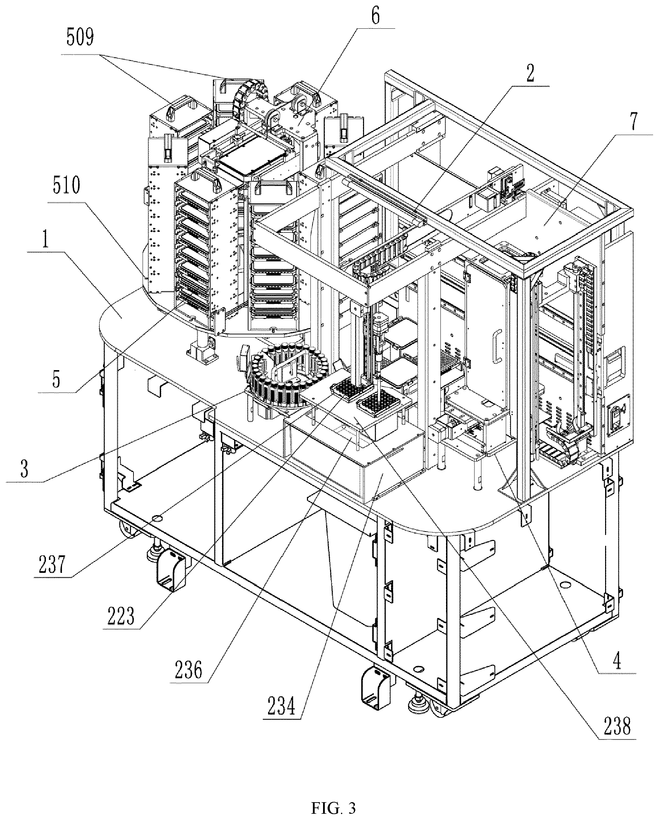

As shown in FIGS. 3 and 4, the pipette tip mounting/dismounting device includes a waste pipette tip bin 234 provided on a front side of the microplate supporting device. A waste pipette tip storage box 235 (shown in FIG. 1) drawn out or put in from a front side of the whole housing 1 is provided in the waste pipette tip bin 234. A pipette tip dropping opening 236 is provided on a top wall of the waste pipette tip bin 234. A support table 238 with a pipette tip accommodating box 237 on an upper surface is provided above the pipette tip dropping opening 236. A plurality of disposable pipette tips 223 are placed in the pipette tip accommodating box 237. One pipette is aligned with one disposable pipette tip 223 in the pipette tip accommodating box 237 and then moves downward to complete the mounting of the disposable pipette tip 223. The support table 238 is provided with a gourd-shaped pipette tip removal opening 239 (shown in FIG. 2) corresponding to the pipette tip dropping opening 236. It is convenient to remove the used disposable pipette tip 223, and the removed disposable pipette tip 223 drops directly into the waste pipette tip storage box 235.

The pipette aspirates sample liquid after the mounting of the disposable pipette tip 223 is completed, therefore it is necessary to scan and record the plurality of sample bottles filled with a sample liquid, such that the corresponding sample bottle can be automatically selected for the aspiration of the sample liquid. The sample identification and recording unit is designed to accomplish this operation.

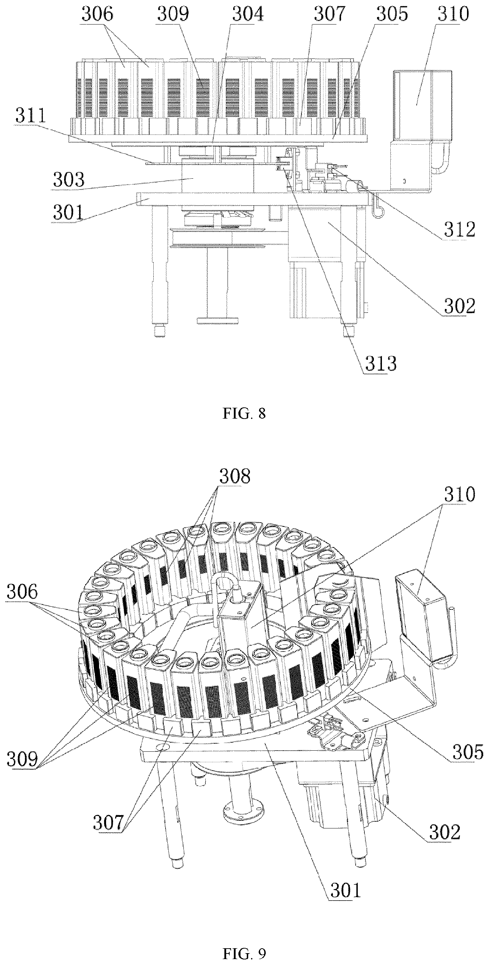

As shown in FIGS. 8 and 9, the sample identification and recording unit 3 includes a sample support base 301 provided under the movement track of the sample addition arm 208. Specifically, the sample support base 301 is provided on one side of the pipette tip mounting/dismounting device, so as to minimize the movement stroke of the pipette when aspirating the liquid. A sample tray rotating shaft 303 driven by an identification and recording unit motor 302 vertically penetrates the sample support base 301. In order to make the structure more compact, the identification and recording unit motor 302 is fixed on a lower surface of the sample support base 301. Similarly, the sample tray rotating shaft 303 is driven by a synchronous belt transmission mechanism. A sample bottle tray connecting plate 304 is horizontally fixedly connected to an upper end of the sample tray rotating shaft 303. In order to ensure the stability during operation, an external thread is further provided on the sample tray rotating shaft 303 to screw with a shaft sleeve. The sample tray rotating shaft 303 located at a lower end of the shaft sleeve is sequentially provided with a stop washer and a lock nut to prevent the sample tray rotating shaft 303 from loosening and falling off after long-term use.

An annular tray 305 is movably placed on the sample bottle tray connecting plate 304. A plurality of clamping grooves 307 for inserting sample bottles 306 are evenly distributed on a circumference of the annular tray 305. A product manufacturing barcode 308 and a patient information barcode 309 are pasted on inner side wall of the sample bottle 306 facing to the sample tray rotating shaft 303 and outer side wall of the sample bottle 306 facing to the outer side of the annular tray 305, respectively. Barcode scanners 310 corresponding to positions of the product manufacturing barcode 308 and the patient information barcode 309 on any sample bottle 306 are fixedly provided inside and outside the annular tray 305 on the sample support base 301, respectively. The two barcode scanners 310 scan the same sample bottle 306 at the same time, which achieves fast scanning and greatly improves the work efficiency.

An annular code disc 311 is fixedly connected to a lower surface of the sample bottle tray connecting plate 304. The sample support base 301 located on one side of the annular code disc 311 is provided with a code disc origin position sensor 312 and a code disc scale position sensor 313. The code disc origin position sensor 312 and the code disc scale position sensor 313 identify and record the position of the sample bottle 306 in real time to realize position memory. In this way, there is no need to consider the position when placing the sample bottle 306, that is, the operator can randomly place the sample bottle, which greatly reduces the difficulty of operation.

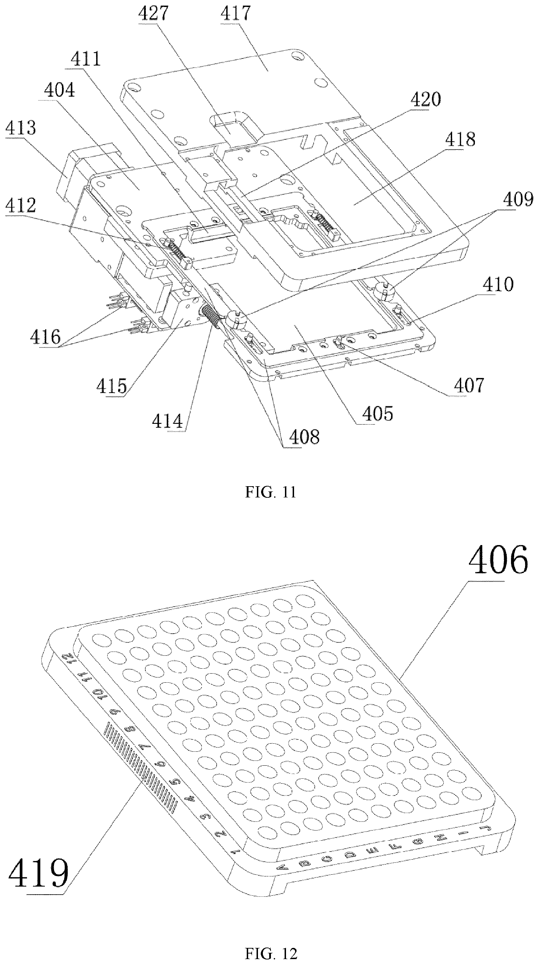

When the pipette adding the sample liquid to the microplate after aspiration, it is necessary to first push the microplate (shown in FIG. 12) onto the microplate supporting device. Therefore, the microplate carrying unit 4 is provided on one side of the microplate supporting device.

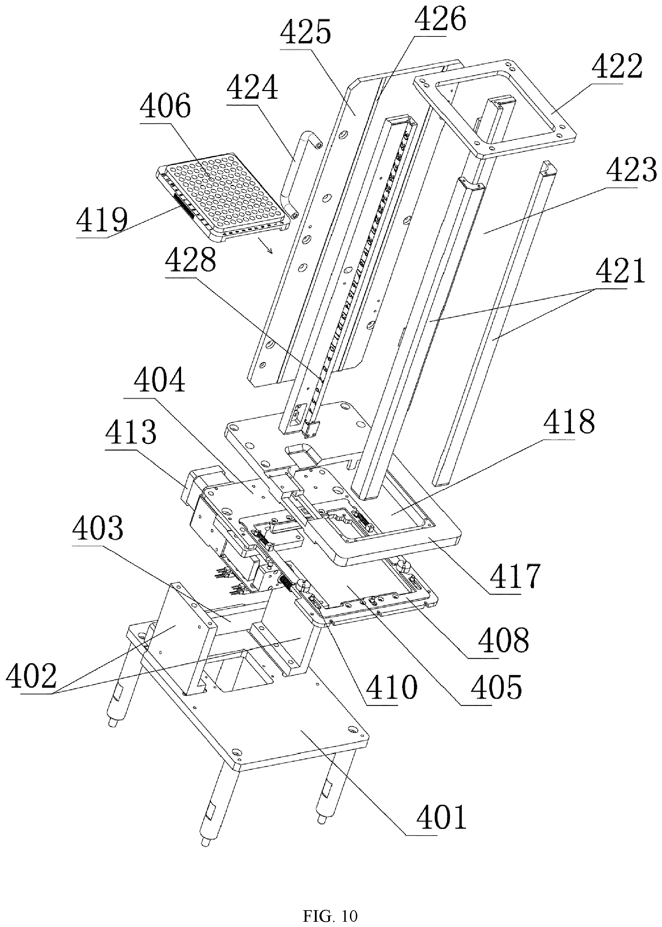

As shown in FIGS. 10 and 11, the microplate carrying unit 4 includes a fixed base 401, and the fixed base 401 is fixedly connected to a microplate release mechanism through a pair of longitudinal support plates 402 arranged at intervals. In order to enhance the supporting ability of the longitudinal support plates 402, the two longitudinal support plates 402 are connected to form a single unit on one side through a reinforcing rib plate 403 provided on the fixed base 401.

The microplate release mechanism includes a bottom cover 404 fixed horizontally on the two longitudinal support plates 402. The bottom cover 404 is provided with a microplate release opening 405. The microplate release opening 405 has a rectangular structure similar to the structure of the existing microplate 406, but it is slightly larger than the existing microplate 406 so as to ensure that the microplate 406 falls smoothly from the microplate release opening. An openable/closable plate with a rectangular ring structure is movably clamped to an upper edge of the microplate release opening 405 through guide pins 407 fixed on the bottom cover 404. There is a plurality of guide pins 407 evenly provided along the edge of the microplate release opening 405. The openable/closable plate is formed by butting pair of U-shaped thin plates 408 moving toward each other in opposite directions. Abutting joints of the two U-shaped thin plates 408 are connected to form a single unit through a rotating sleeve 409. In this way, when the U-shaped thin plate 408 on one side moves, the U-shaped thin plate 408 on the other side is driven to move in the opposite direction, thereby realizing the opening and closing function. The two U-shaped thin plates 408 are respectively provided with strip holes 410 matching the guide pins 407. The length direction of the strip hole 410 is consistent with the movement direction of the U-shaped thin plate 408. The guide pin 407 is movably clamped in the strip hole 410 to realize the guiding function of the guide pin 407.

The two U-shaped thin plates 408 are respectively integrated by two side-wall thin plates and a bottom-wall thin plate. A set of clamping claws 411 are symmetrically provided on opposite sides of the bottom-wall thin plates of the two U-shaped thin plates 408 to clamp the microplate 406. One of the U-shaped thin plates 408 is provided with a return spring 412 having an outer end connected to the bottom cover 404. A stretching direction of the return spring 412 is consistent with an opening/closing direction of the U-shaped thin plate 408 to ensure that the two U-shaped thin plates 408 are closed under the action of the return spring 412 when they are in an opened state. A microplate release motor 413 is fixed on a lower surface of the bottom cover 404. A microplate release leadscrew 414 is coaxially fixed on a working shaft of the microplate release motor 413. An axial direction of the microplate release leadscrew 414 is consistent with the opening/closing direction of the two U-shaped thin plates 408. The microplate release leadscrew 414 is provided with a nut seat 415 used for driving the two U-shaped thin plates 408 to open and close. A pair of stroke position sensors 416 for monitoring a movement stroke of the nut seat 415 is arranged at intervals on the microplate release motor 413. The nut seat 415 is connected to the U-shaped thin plates 408 on one side, and drives them to realize the opening and closing actions. The two stroke position sensors 416 arranged at intervals are used to monitor the position of the nut seat 415 and limit the maximum stroke of the nut seat 415.

A connection base 417 fixedly connected to the bottom cover 404 is fastened above the two U-shaped thin plates 408. The connection base 417 is provided with the microplate dropping opening 418 corresponding to the microplate release opening 405. A U-shaped through slot 420 corresponding to the position of the information barcode 419 on the microplate 406 is provided on one side of the microplate dropping opening 418 to cooperate with the external scanning mechanism to scan the microplate 406 on the verge of dropping, , and to store and record the information.

A microplate stacking mechanism is provided on the microplate release mechanism. The microplate stacking mechanism includes retaining posts 421 vertically fixed at four corners of the microplate dropping opening 418. Upper ends of the retaining posts 421 are connected to form a single unit by a connecting top plate 422 to define a microplate stacking bin 423 adapted to the microplate 406. A magnetic attraction door 425 with a handle 424 is hinged on one side of the microplate stacking bin 423. AHall sensor is installed on the retaining post 421 that is attracted to the magnetic attraction door 425. When the magnetic attraction door 425 is not completely closed, the Hall sensor will send out an alarm signal to indicate that the magnetic attraction door 425 is not closed properly. In addition, a protruding strip 426 for fixing the microplate 406 is longitudinally provided on an inner side of the magnetic attraction door 425. When the magnetic attraction door 425 is closed, the microplate 406 in the microplate stacking bin 423 is fixed by the protruding strip 426 so as to prevent the microplate from moving left or right in the microplate stacking bin 423.

The microplate 406 is directly horizontally stacked in the microplate stacking bin 423. In order to adapt to the foolproof function of the microplate 406 (one corner of the microplate 406 is a right angle, and the other three corners are arc angles. Generally, when the microplate 406 is placed in the front direction, its lower right corner is a right angle so as to realize a foolproof function), inner sides of the two retaining posts 421 away from the magnetic attraction door 425 are arc-shaped to match the microplate 406. Meanwhile, a manual grabbing groove 427 is provided on an edge of the microplate dropping opening 418 located under the magnetic attraction door 425. When an error occurs in the microplate 406 at the bottom, the microplate 406 can be manually taken out through the manual grabbing groove 427. In addition, in order to clearly observe the number of stacked microplates 406, microplate number indicators 428 corresponding to the microplates 406 are provided from bottom to top on an outer side of one of the retaining posts 421. The distance between two microplate number indicators 428 adjacent to each other in the vertical direction is the thickness of one microplate 406.

After the sample addition unit 2 completes the sample addition on the microplate 406, the microplate enters the incubation unit 5 for incubation.

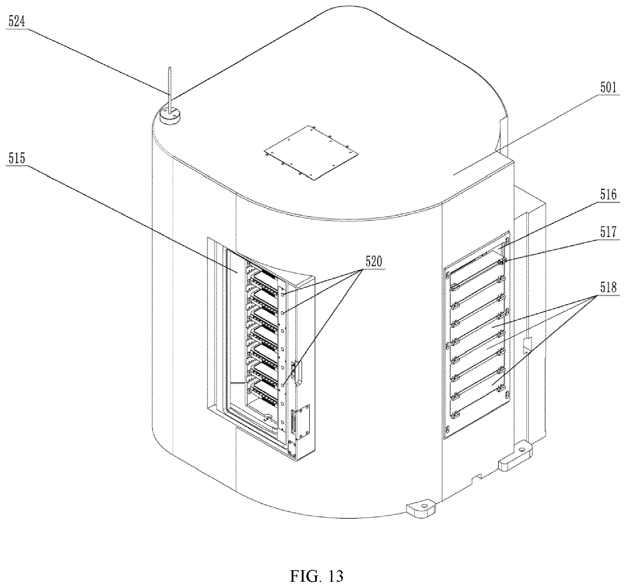

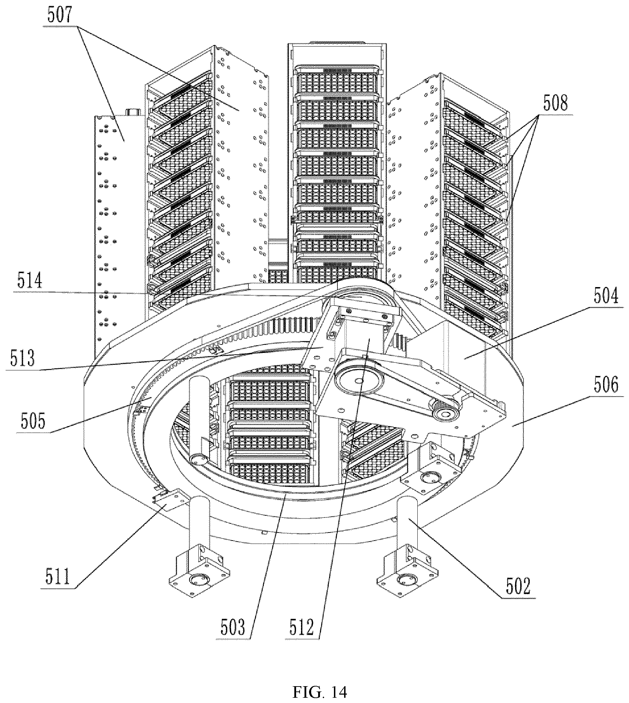

As shown in FIGS. 13 and 14, the incubation unit 5 includes an incubator 501 provided on one side of the sample addition unit 2. An incubation base 502 is provided in the incubator 501. A thin-walled bearing 503 is horizontally provided on an upper surface of the incubation base 502. An inner ring of the thin-walled bearing 503 is fixedly connected to the incubation base 502, and a driven pulley 505 driven by an incubation motor 504 is fixedly sleeved on an outer ring of the thin-walled bearing. An upper surface of the driven pulley 505 is fixedly connected to a horizontal incubation tray 506 that is coaxially arranged. Eight incubation shelves 507 are evenly distributed along a circumferential direction of the horizontal incubation tray 506. Eight layers of microplate clamping grooves 508 are longitudinally arranged at intervals in the incubation shelf 507. A total of 64 microplates 406 can be put in at one time, which greatly increase the number of the microplates. In order to pick and place the incubation shelves 507 conveniently, each incubation shelf 507 is fixed on an upper surface of the horizontal incubation tray 506 by a pin, and a grip 509 (shown in FIG. 3) is provided on an upper surface of the incubation shelf 507. In addition, in order to quickly and accurately find the position of the required microplate 406 when picking and placing the microplate 406, shelf scales 510 corresponding to the incubation shelves 507 are circumferentially provided on the upper surface of the horizontal incubation tray 506. Meanwhile, a position sensor 511 is provided on the incubation base 502 to record the rotation position of the horizontal incubation tray 506, so as to ensure the rotation accuracy of the shelf.

In order to evenly distribute the eight incubation shelves 507 with the same structure on the horizontal incubation tray 506, the diameter of the horizontal incubation tray 506 is relatively large, so is the outer diameter of the driven pulley 505 driving the rotation of the horizontal incubation tray. However, most of the existing motors have a fixed speed. Therefore, in order to adapt the speed of the incubation motor 504, a transmission 512 is provided on the incubation base 502. The incubation motor 504 is drivingly connected to the driven pulley 505 through the transmission 512. Specifically, the transmission 512 is fixedly connected to a lower surface of the incubation base 502 through a fixing plate 513. An output end of the transmission 512 extends vertically upward to a place above the incubation base 502, and a driving pulley 514 is provided on the output end of the transmission 512. The driving pulley 514 is drivingly connected to the driven pulley 505 through a transmission belt. An input end of the transmission 512 is drivingly connected to the incubation motor 504 through a synchronous belt transmission mechanism.

A microplate inlet and a microplate outlet 515 are provided on side walls of the incubator 501. In order to cooperate with the sample addition unit and facilitate the automatic placement of the microplate 406, the microplate inlet includes eight inlet door openings 516 that are longitudinally arranged at intervals. The eight inlet door openings 516 are in a one-to-one correspondence with the eight layers of microplate clamping grooves 508. A push door 518 is hinged on the inlet door opening 516 through an automatic rebound hinge 517. The automatic rebound hinge 517 is a hydraulic hinge (the full name is torsion spring hydraulic buffer closing hinge) or a pneumatic hinge (the full name is pneumatic automatic closing hinge), which is to ensure that when the microplate 416 exits the station after the microplate 406 is placed, the push door 518 rebounds and the inlet door opening 516 is closed, which realizes automation and reduces the risk of failure caused by unstable factors.

The microplate outlet 515 is in sealed communication with a front side wall of the whole housing 1. The size of the microplate outlet 515 is adapted to that of an outward opening of the incubation shelf 507. An incubator door 519 (shown in FIG. 1) is hinged on the front side wall of the whole housing 1 corresponding to the microplate outlet 515. In order to enhance the sealing performance, an annular sealing strip that fits an edge of the microplate outlet 515 is provided on an inner side of the incubator door 519. A magnetic holder that attracts and engages with the microplate outlet 515 may also be provided on an opening side of the incubator door 519. A Hall sensor is provided on the microplate outlet near the magnetic holder. When the incubator door 519 is not completely closed, the Hall sensor will send out an alarm signal to indicate that the incubator door 519 is not closed. A plurality of incubation information indicator lights 520 are provided on an edge of the microplate outlet 515 corresponding to the opening side of the incubator door 519. The incubation information indicator lights 520 are in a one-to-one correspondence with the microplate clamping grooves 508 in the incubation shelf 507. The incubation information indicator lights 520 can display different colors through related software, corresponding to different incubation information of the microplate 406 in the incubation shelf 507.

A heating fan 522 (shown in FIG. 2) with a heating wire 521 is provided on a top wall of the incubator 501. A temperature sensor is provided in the incubator 501 for monitoring and feedback the temperature information in the incubator 501 in real time. An incubation information display screen 523 (shown in FIG. 1) is provided on the front side wall of the whole housing 1 under the incubator door 519 to display the temperature information at any time, which facilitates the grasping of the real-time parameter in the incubator 501 at any time. In addition, a thermometer 524 is penetrated sealedly on a top wall of the incubator 501. An upper end of the thermometer 524 penetrates the top wall of the whole housing 1, which is convenient for the operator to read the temperature information intuitively.

After incubation of the microplate in the incubation unit 5 is completed, the microplate enters the testing unit 6 for microorganism identification and drug sensitivity testing.

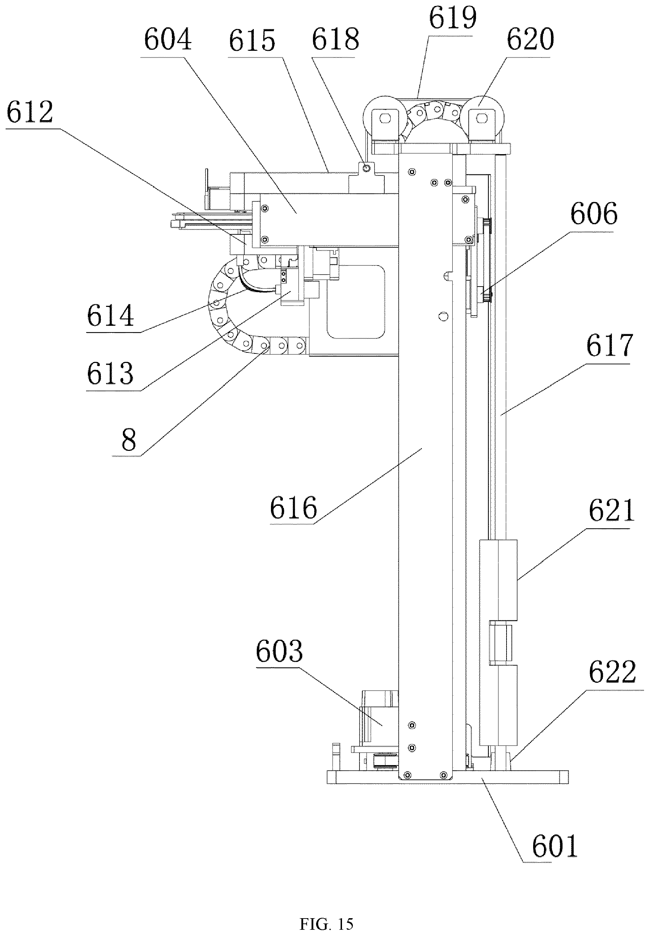

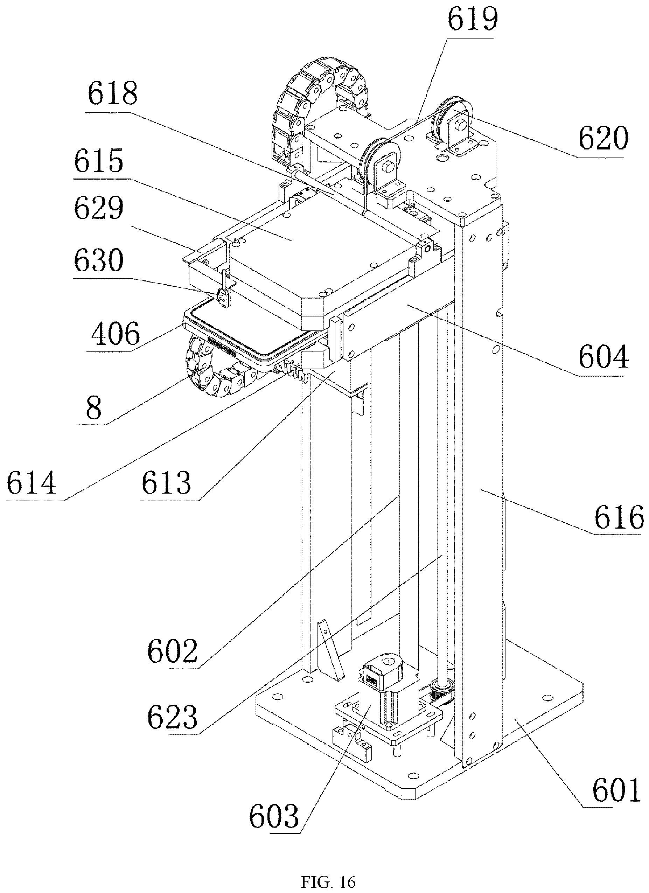

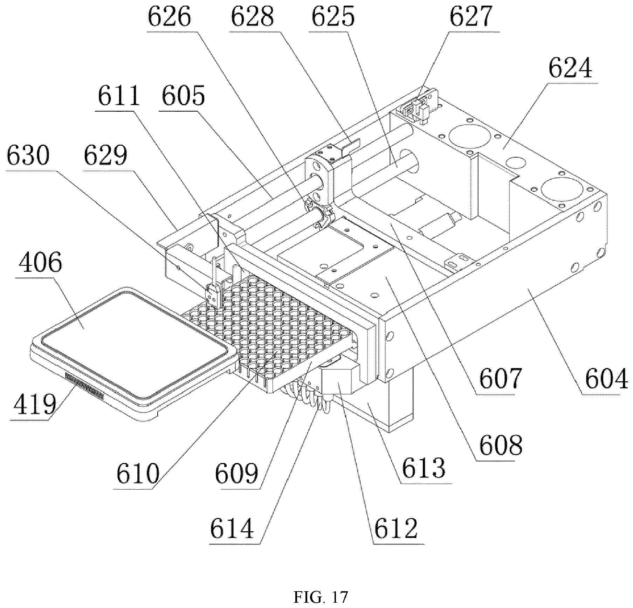

As shown in FIGS. 15 to 17, the testing unit 6 includes a testing base 601 provided at a central position on an inner side of the incubation shelves 507. A first guide rail 602 is longitudinally provided on the testing base 601. An information acquisition mechanism driven by a first power mechanism 603 to ascend and descend is slidably provided on the first guide rail 602. The first power mechanism 603 is a synchronous belt transmission mechanism provided on the testing base 601. A counterweight mechanism is provided on the testing base 601 to prevent the information acquisition mechanism from falling, so as to achieve a protection function.

The information acquisition mechanism includes a horizontal lifting frame 604 slidably provided on the first guide rail 602. A second guide rail 605 is horizontally provided in the horizontal lifting frame 604, and is close to a long side wall of the horizontal lifting frame. A slider 607 driven by a second power mechanism 606 is slidably provided on the second guide rail 605. A tray connecting block 608 is horizontally fixedly connected to one side of the slider 607. A testing tray 609 is fixedly connected to a side of the tray connecting block 608 away from the slider 607. The testing tray 609 is provided with a clamping hole 610 matching a bottom surface of the microplate 406 for clamping and fixing on the microplate 406. The testing tray 609 passes through a tray access opening 611 on a short side wall of the horizontal lifting frame 604. An optical fiber fixing block 612 is provided at a lower edge of the tray access opening 611. A light-emitting diode (LED) lamp 613 is provided at the bottom of the horizontal lifting frame 604. The light-emitting diode (LED) lamp 613 is filtered by an optical filter and irradiated by an optical fiber 614 into the optical fiber fixing block 612. The light coming out of the optical fiber fixing block 612 is irradiated on wells of the microplate 406 through the testing tray 609, and finally collected by a photoelectric signal conversion module 615 covering the top of the horizontal lifting frame 604. The collected attenuated light signal is transmitted to a single-chip microcomputer (i.e. PLC), and the single-chip microcomputer calculates the microbial resistance parameter of the sample, thereby completing information acquisition and testing.

The counterweight mechanism includes an inverted U-shaped frame 616 longitudinally provided on the testing base 601. The first guide rail 602 and the information acquisition mechanism are located inside the inverted U-shaped frame 616. A third guide rail 617 is longitudinally provided on the testing base 601 on a rear side of the inverted U-shaped frame 616. A hanging shaft 618 located above the photoelectric signal conversion module 615 is provided on the horizontal lifting frame 604. The hanging shaft 618 is horizontally provided along a width direction of the inverted U-shaped frame 616. A steel cable 619 with one end fixed on the hanging shaft 618 is going around a fixed pulley 620 on the top of the inverted U-shaped frame 616, and is fixedly connected to a counterweight 621 slidably provided on the third guide rail 617. A shock-absorbing pad 622 is sleeved on a lower end of the third guide rail 617. The shock-absorbing pad 622 is located under the counterweight 621, fits and corresponds to the counterweight 621, and has a buffering effect on the falling of the counterweight 621.

In addition, in order to improve the stability of the information acquisition mechanism during movement, a first screw 623 extending vertically upward is fixedly connected to the driven pulley of the first power mechanism 603, and a lifting nut seat 624 is provided on an opposite side of the horizontal lifting frame 604 and the tray access opening 611. The lifting nut seat 624 is connected to a first nut screwed on the first screw 623. The second power mechanism 606 is a synchronous belt transmission mechanism provided on the horizontal lifting frame 604. A second screw 625 parallel to the second guide rail 605 is fixedly connected to the driven pulley of the second power mechanism 606. A second nut 626 is screwed on the second screw 625. The slider 607 is a nut slider connected to the second nut 626. A first position sensor 627 is provided on the horizontal lifting frame 604 on a rear end of the second screw 625. A sensing sheet 628 is provided on the slider 607. When the first position sensor 627 detects a signal of the sensing sheet 628, it indicates that the testing tray 609 is retracted to a limit position. The horizontal lifting frame 604 on a front end of the second screw 625 is provided with an L-shaped connecting member 629 (the connecting member 629 is a sheet metal member). The connecting member 629 is provided with a second position sensor 630 for sensing whether there is a microplate 406 clamped on the testing tray 609.

The microplate transfer unit serves as a connecting mechanism between the microplate carrying unit 4, the sample addition unit 2 and the incubation unit 5. The microplate transfer unit transfers the microplate from the microplate carrying unit 4 to the sample addition unit 2, and then transfers the microplate (the sample addition is completed) from the sample addition unit 2 to the incubation unit 5.

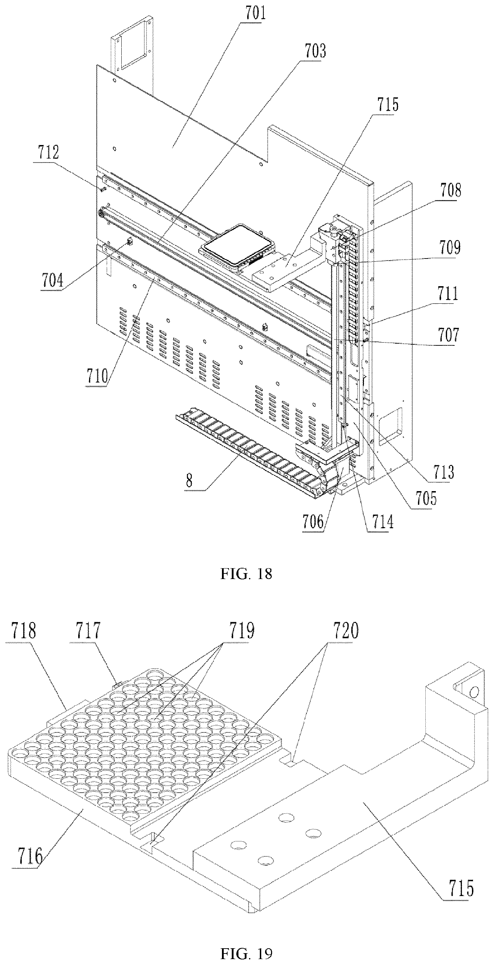

As shown in FIG. 18, the microplate transfer unit 7 includes a longitudinal base plate 701 attached and fixed on a front side of the back plate 202. A transverse transmission belt 703 driven by a transverse driving motor 702 (provided on a back side of the longitudinal base plate 701, which is not shown in FIG. 18) is horizontally provided on a front side of the longitudinal base plate 701. A plurality of arm plate position sensors 704 are arranged at intervals, along a length direction of the longitudinal base plate, on the longitudinal base plate 701 located below the transverse transmission belt 703. A conveying end of the transverse transmission belt 703 is adapted and corresponds to the microplate inlet of the incubator 501. A longitudinal arm plate 705 is fixed on the transverse transmission belt 703. A longitudinal driving motor 706 is provided on one end of the longitudinal arm plate 705. An end of a working shaft of the longitudinal driving motor 706 is connected to a synchronously rotating leadscrew 707 located on a front side of the longitudinal arm plate 705 through a coupling. An axial direction of the synchronously rotating leadscrew 707 is consistent with a length direction of the longitudinal arm plate 705. The synchronously rotating leadscrew 707 is provided with a leadscrew nut 708 sliding vertically. A height positioning plate in a direction consistent with a length direction of the synchronously rotating leadscrew 707 is provided on the longitudinal arm plate 705. The leadscrew nut 708 is provided with a microplate transfer support bracket and a nut position sensor 709 that is adapted to the height positioning plate. The length of the height positioning plate is matched with the movement distance of the leadscrew nut 708 to ensure that the position information of the vertical movement of the leadscrew nut 708 can be monitored over its entire stroke.

In order to improve the stability of the longitudinal arm plate 705 moving transversely along the longitudinal base plate 701, a front side of the longitudinal base plate 701 located on upper and lower sides of the transverse transmission belt 703 is symmetrically provided with arm plate guide rails 710 that are consistent with the length direction of the transverse transmission belt 703. The length of the arm plate guide rail 710 is adapted to the length of the transverse transmission belt 703. The longitudinal arm plate 705 is fixedly connected to an arm plate slider 711 slidably clamped on the arm plate guide rail 710. In addition, arm plate limiting posts 712 for retaining the longitudinal arm plate 705 are respectively provided on the longitudinal base plate 701 at both ends of the transverse transmission belt 703, which can effectively prevent the longitudinal arm plate 705 from derailing when the positioning of the transverse driving motor 702 fails (that is, when the transverse driving motor 702 fails). The arm plate limiting post 712 is a screw fixed on the longitudinal base plate 701, which is easily accessible.

In order to improve the stability of the leadscrew nut 708 moving vertically along the longitudinal arm plate 705, a nut guide rail 713 consistent with the length direction of the synchronously rotating leadscrew 707 is provided on a front side of the longitudinal arm plate 705. The length of the nut guide rail 713 is adapted to the movement stroke of the leadscrew nut 708. The leadscrew nut 708 is fixedly connected to a screw connecting slider slidably provided on the nut guide rail 713. Nut limit posts 714 for retaining the leadscrew nut 708 are respectively provided on the longitudinal arm plate 705 located at both ends of the synchronously rotating leadscrew 707, which can effectively prevent the leadscrew nut 708 from derailing when the positioning of the longitudinal driving motor 706 fails (that is, when the longitudinal driving motor 706 fails).

As shown in FIG. 19, the microplate transfer support bracket includes a microplate transfer cantilever arm 715 that is fixedly connected to the leadscrew nut 708 and extends horizontally forward. A microplate transfer bracket 716 matching the inlet door opening 516 is fixed horizontally on the microplate transfer cantilever arm 715. A bracket in-position sensor 717 is provided on a side of the microplate transfer bracket 716 to monitor whether the microplate 406 is transferred in position. In addition, a buffer rubber block 718 for blocking the microplate 406 is provided on a side (the side is away from the microplate transfer cantilever arm 715) of the microplate transfer bracket 716, which is used to cushion the microplate 406 when it moves transversely along the longitudinal base plate 701. An upper surface of the microplate transfer bracket 716 is evenly distributed with 10 × 12 microplate positioning holes 719 that are matched with the bottom surface of the microplate 406. Manual grabbing grooves 720 are respectively provided on two sides of the microplate transfer bracket 716 between the microplate positioning holes 719 and the microplate transfer cantilever arm 715, which are used to avoid the interference of other parts when the microplate 406 is picked and placed.

In addition, in order to prevent internal cables from affecting the operation of the system, drag chains 8 are provided on movement trajectories of the X-axis synchronous belt transmission mechanism 204, the Y-axis synchronous belt transmission mechanism 207 and the Z-axis synchronous belt transmission mechanism 210 of the sample addition unit, on movement trajectories of the first power mechanism 603 and the second power mechanism 606 of the testing unit, and on movement trajectories of the transverse transmission belt 703 of the microplate transfer unit and the microplate transfer support bracket. The cables are hidden in the drag chains 8 to prevent interference or abrasion with other moving parts so as to form an effective protection.

The working process of the present invention is as follows:

First, the microplate carrying unit 4 scans the microplate 406 in the microplate release mechanism, and the sample identification and recording unit 3 scans the sample bottles 306 placed on the annular tray 305 at the same time. The system automatically matches the category information of the microplate 406 and the sample bottle. After the matching is successful, the microplate transfer unit takes out the microplate 406 from the microplate stacking mechanism, transfers it to the microplate supporting device, and uncovers the microplate 406 at the same time. Then the system automatically selects the corresponding sample bottle 306 according to the category information of the microplate 406, and moves the sample bottle 306 to the side close to the pipette tip mounting/dismounting device. The pipette of the sample addition unit 2 runs to mount the disposable pipette tip 223. After the disposable pipette tip 223 is mounted, the pipette moves to the target sample bottle 306 for aspiration. Then the pipette runs to the microplate supporting device to add the liquid. After the sample addition is completed, the microplate transfer unit 7 carries the microplate 406, and transports it to the incubator 501 for incubation. Meanwhile, the pipette runs to the pipette tip mounting/dismounting device to dismount the used disposable pipette tip 223, and waits for the next mounting. After the incubation is completed, the testing unit 6 removes the microplate 406 from the inside of the incubation shelf 507 for identification and drug sensitivity testing. After the test, the microplate is put back to the original position in the incubation shelf 507, and the test data is displayed on the computer in real time. Thus, a whole set of actions are completed.

## Claims

1. A fully automatic microorganism identification and drug sensitivity analysis system, comprising a whole housing (1), **characterized in that**, a sample addition unit (2), a sample identification and recording unit (3), a microplate carrying unit (4), an incubation unit (5), a testing unit (6) and a microplate transfer unit (7) are provided in an internal chamber of the whole housing (1); the sample addition unit (2) automatically carries out mounting/dismounting of a pipette tip, aspiration of a pipette body and sample addition on a microplate (406); the sample identification and recording unit (3) is located on one side of the sample addition unit (2), and scans, records and automatically selects a sample bottle (306) filled with a sample; the sample identification and recording unit (3) includes an annular tray (305) , a plurality of clamping grooves (307) for inserting sample bottles (306) are evenly distributed on a circumference of the annular tray (305), a patient information barcode (309) is pasted on outer side wall of the sample bottle (306); a barcode scanner (310) corresponding to position of the patient information barcode (309) on any sample bottle (306) is fixedly provided outside the annular tray (305) on the sample support base (301);
the microplate carrying unit (4) is located on the other side of the sample addition unit (2), and is used for loading, scanning and recording the microplate (406); the microplate carrying unit (4) includes a microplate release mechanism ; the microplate release mechanism includes a microplate dropping opening (418), a U-shaped through slot (420) corresponding to a position of an information barcode (419) on the microplate (406) is provided on one side of the microplate dropping opening (418) to cooperate with an external scanning mechanism to scan the microplate (406), and to store and record the information;
the incubation unit (5) incubates the microplate (406) after the sample addition; the testing unit (6) carries out the identification and the drug sensitivity testing on the microplate (406) after being incubated; the microplate transfer unit (7) comprises a longitudinal arm plate (705) moving linearly along an X-axis direction; the microplate carrying unit (4), the sample addition unit (2) and the incubation unit (5) are sequentially provided on an X-axis movement path of the longitudinal arm plate (705); the longitudinal arm plate (705) comprises a microplate transfer cantilever arm (715) moving along a Y-axis direction;
the microplate carrying unit (4) scans the microplate (406) in the microplate release mechanism, and the sample identification and recording unit (3) scans the sample bottles (306) placed on the annular tray (305) at the same time; the system automatically matches category information of the microplate (406) and the sample bottle (306); after matching is successful, the microplate transfer unit (7) takes out the microplate (406) from a microplate carrying unit (4); then the system automatically selects the corresponding sample bottle (306) according to the category information of the microplate (406); a pipette moves to the target sample bottle (306) for aspiration; then the pipette runs to the microplate (406) to add the liquid. After the sample addition is completed, the microplate transfer unit (7) carries the microplate (406), and transports it to the incubation unit (5) for incubation; after the incubation is completed, the testing unit (6) removes the microplate (406) from inside of the incubation unit (5) for identification and drug sensitivity testing; after the test, the microplate (406) is put back to an original position in the incubation unit (5), and a test data is displayed on the computer.

2. The fully automatic microorganism identification and drug sensitivity analysis system according to claim 1, **characterized in that**, the sample addition unit (2) comprises a support frame (201) provided in the whole housing (1) and a back plate (202) fixed longitudinally between two posts on a rear side of the support frame (201); an X-axis synchronous belt transmission mechanism (204) driven by an X-axis motor (203) is horizontally provided on a rear side of the back plate (202); a synchronous belt of the X-axis synchronous belt transmission mechanism (204) is fixedly connected to a cantilever arm (205) extending horizontally forward; a Y-axis synchronous belt transmission mechanism (207) driven by a Y-axis motor (206) is horizontally provided on the cantilever arm (205); a synchronous belt of the Y-axis synchronous belt transmission mechanism (207) is fixedly connected to a sample addition arm (208) extending vertically downward; a Z-axis synchronous belt transmission mechanism (210) driven by a Z-axis motor (209) is longitudinally provided on the sample addition arm (208) ; a synchronous belt of the Z-axis synchronous belt transmission mechanism (210) is fixedly connected to a pipette with an aspiration port extending vertically downward; a microplate supporting device and a pipette tip mounting/dismounting device are provided under a movement track of the sample addition arm (208).

3. The fully automatic microorganism identification and drug sensitivity analysis system according to claim 2, **characterized in that**, the pipette comprises an aspiration pump motor (219) fixed on the synchronous belt of the Z-axis synchronous belt transmission mechanism (210); a working shaft of the aspiration pump motor (219) extends vertically downward, and a synchronously rotating drive guide screw (220) is fixedly connected to a lower end of the working shaft through a coupling; the drive guide screw (220) is provided with a drive screw nut (221) moving vertically along a length direction of the drive guide screw (220); a piston-type aspiration pump pipette (222) fixedly connected to a housing of the aspiration pump motor (219) is provided vertically downward under the drive guide screw (220); a piston rod on an upper end of the piston-type aspiration pump pipette (222) is fixedly connected to the drive screw nut (221), and a disposable pipette tip (223) located in a pipette tip accommodating box (237) is movably clamped to an aspiration port at a lower end of the piston-type aspiration pump pipette (222).

4. The fully automatic microorganism identification and drug sensitivity analysis system according to claim 2, **characterized in that**, the sample identification and recording unit (3) comprises a sample support base (301) provided under the movement track of the sample addition arm (208); a sample tray rotating shaft (303) driven by an identification and recording unit motor (302) vertically penetrates the sample support base (301); a sample bottle tray connecting plate (304) is horizontally fixedly connected to an upper end of the sample tray rotating shaft (303); an annular tray (305) is movably placed on the sample bottle tray connecting plate (304); a plurality of clamping grooves (307) for inserting the sample bottles (306) are evenly distributed on a circumference of the annular tray (305); a product manufacturing barcode (308) and a patient information barcode (309) are pasted on inner side wall of the sample bottle (306) facing to the sample tray rotating shaft (303) and outer side wall of the sample bottle (306) facing to the outer side of the annular tray (305), respectively; barcode scanners (310) corresponding to positions of the product manufacturing barcode (308) and the patient information barcode (309) on any sample bottle (306) are fixedly provided inside and outside the annular tray (305) on the sample support base (301), respectively; an annular code disc (311) is fixedly connected to a lower surface of the sample bottle tray connecting plate (304); the sample support base (301) located on one side of the annular code disc (311) is provided with a code disc origin position sensor (312) and a code disc scale position sensor (313).

5. The fully automatic microorganism identification and drug sensitivity analysis system according to claim 2, **characterized in that**, the microplate carrying unit (4) comprises a fixed base (401) provided on one side of the microplate supporting device; the fixed base (401) is fixedly connected to a microplate release mechanism through a pair of longitudinal support plates (402) arranged at intervals; the microplate release mechanism comprises a bottom cover (404) fixed horizontally on the two longitudinal support plates (402); the bottom cover (404) is provided with a microplate release opening (405); an openable/closable plate with a rectangular ring structure is movably clamped to an upper edge of the microplate release opening (405) through a guide pin (407) fixed on the bottom cover (404); the openable/closable plate is formed by butting a pair of U-shaped thin plates (408) moving toward each other in opposite directions; abutting joints of the two U-shaped thin plates (408) are connected to form a single unit through a rotating sleeve (409); a set of clamping claws (411) are symmetrically provided on opposite sides of bottom-wall thin plates of the two U-shaped thin plates (408); one of the U-shaped thin plates (408) is provided with a return spring (412) having an outer end connected to the bottom cover (404); a stretching direction of the return spring (412) is consistent with an opening/closing direction of the U-shaped thin plate (408); a microplate release motor (413) is fixed on a lower surface of the bottom cover (404); a microplate release leadscrew (414) is coaxially fixed on a working shaft of the microplate release motor (413); an axial direction of the microplate release leadscrew (414) is consistent with the opening/closing direction of the two U-shaped thin plates (408); the microplate release leadscrew (414) is provided with a nut seat (415) used for driving the two U-shaped thin plates (408) to open and close; a pair of stroke position sensors (416) for monitoring a movement stroke of the nut seat (415) are arranged at intervals on the microplate release motor (413); a connection base (417) fixedly connected to the bottom cover (404) is fastened above the two U-shaped thin plates (408); the connection base (417) is provided with a microplate dropping opening (418) corresponding to the microplate release opening (405); a U-shaped through slot (420) corresponding to the position of the information barcode (419) on the microplate (406) is provided on one side of the microplate dropping opening (418); a microplate stacking mechanism is provided on the microplate release mechanism; the microplate stacking mechanism comprises retaining posts (421) vertically fixed at four corners of the microplate dropping opening (418); upper ends of the retaining posts (421) are connected to form a single unit by a connecting top plate (422) to define a microplate stacking bin (423) adapted to the microplate (406); a magnetic attraction door (425) with a handle (424) is hinged on one side of the microplate stacking bin (423); a Hall sensor is installed on the retaining post (421) that is attracted to the magnetic attraction door (425).

6. The fully automatic microorganism identification and drug sensitivity analysis system according to claim 2, **characterized in that**, the incubation unit (5) comprises an incubator (501) provided on one side of the sample addition unit (2); an incubation base (502) is provided in the incubator (501); a thin-walled bearing (503) is horizontally provided on an upper surface of the incubation base (502); an inner ring of the thin-walled bearing (503) is fixedly connected to the incubation base (502), and a driven pulley (505) driven by an incubation motor (504) is fixedly sleeved on an outer ring of the thin-walled bearing (503); an upper surface of the driven pulley (505) is fixedly connected to a horizontal incubation tray (506) that is coaxially arranged; a plurality of incubation shelves (507) with outward openings are evenly distributed along a circumferential direction of the horizontal incubation tray (506); a plurality of layers of microplate clamping grooves (508) are longitudinally arranged at intervals in the incubation shelf (507); each incubation shelf (507) is fixed on an upper surface of the horizontal incubation tray (506) by a pin; a microplate inlet and a microplate outlet (515) are provided on side walls of the incubator (501) ; the microplate inlet comprises a plurality of inlet door openings (516) longitudinally arranged at intervals; the inlet door openings (516) are in a one-to-one correspondence with the microplate clamping grooves (508); a push door (518) is hinged on the inlet door opening (516) through an automatic rebound hinge (517); the microplate outlet (515) is in sealed communication with a front side wall of the whole housing (1); a size of the microplate outlet (515) is adapted to a size of the outward opening of the incubation shelf (507); an incubator door (519) is hinged on the front side wall of the whole housing (1) corresponding to the microplate outlet (515); a heating fan (522) with a heating wire (521) is provided on a top wall of the incubator (501); a temperature sensor is provided in the incubator (501); an incubation information display screen (523) is provided on the front side wall of the whole housing (1) under the incubator door (519).

7. The fully automatic microorganism identification and drug sensitivity analysis system according to claim 6, **characterized in that**, a transmission (512) is provided on the incubation base (502) ; the transmission (512) is fixedly connected to a lower surface of the incubation base (502) through a fixing plate (513); an output end of the transmission (512) extends vertically upward to a place above the incubation base (502), and a driving pulley (514) is provided on the output end of the transmission (512); the driving pulley (514) is drivingly connected to the driven pulley (505) through a transmission belt; an input end of the transmission (512) is drivingly connected to the incubation motor (504) through a synchronous transmission mechanism; a plurality of incubation information indicator lights (520) are provided on an edge of the microplate outlet (515) corresponding to an opening side of the incubator door (519); the incubation information indicator lights (520) are in a one-to-one correspondence with the microplate clamping grooves (508) in the incubation shelf (507).

8. The fully automatic microorganism identification and drug sensitivity analysis system according to claim 6, **characterized in that**, the testing unit (6) comprises a testing base (601) provided at a central position on an inner side of the incubation shelves (507); a first guide rail (602) is longitudinally provided on the testing base (601); an information acquisition mechanism driven by a first power mechanism (603) to ascend and descend is slidably provided on the first guide rail (602); a counterweight mechanism is provided on the testing base (601) to prevent the information acquisition mechanism from falling; the information acquisition mechanism comprises a horizontal lifting frame (604) slidably provided on the first guide rail (602); a second guide rail (605) is horizontally provided in the horizontal lifting frame (604), and is close to a long side wall of the horizontal lifting frame (604); a slider (607) driven by a second power mechanism (606) is slidably provided on the second guide rail (605); a tray connecting block (608) is horizontally fixedly connected to one side of the slider (607); a testing tray (609) is fixedly connected to a side of the tray connecting block (608) away from the slider (607); the testing tray (609) passes through a tray access opening (611) on a short side wall of the horizontal lifting frame (604); an optical fiber fixing block (612) is provided at a lower edge of the tray access opening (611); a light-emitting diode (LED) lamp (613) is provided at a bottom of the horizontal lifting frame (604); light-emitting diode (LED) lamp (613) is irradiated on the testing tray (609) through an optical fiber (614) via the optical fiber fixing block (612); a photoelectric signal conversion module (615) covers a top of the horizontal lifting frame (604).

9. The fully automatic microorganism identification and drug sensitivity analysis system according to claim 8, **characterized in that**, the counterweight mechanism comprises an inverted U-shaped frame (616) longitudinally provided on the testing base (601); the first guide rail (602) and the information acquisition mechanism are located inside the inverted U-shaped frame (616); a third guide rail (617) is longitudinally provided on the testing base (601) on a rear side of the inverted U-shaped frame (616); a hanging shaft (618) located above the photoelectric signal conversion module (615) is provided on the horizontal lifting frame (604); the hanging shaft (618) is horizontally provided along a width direction of the inverted U-shaped frame (616); a steel cable (619) with one end fixed on the hanging shaft (618) goes around a fixed pulley (620) on a top of the inverted U-shaped frame (616), and is fixedly connected to a counterweight (621) slidably provided on the third guide rail (617).

10. The fully automatic microorganism identification and drug sensitivity analysis system according to claim 6, **characterized in that**, the microplate transfer unit (7) comprises a longitudinal base plate (701) attached and fixed on a front side of the back plate (202); a transverse transmission belt (703) driven by a transverse driving motor (702) is horizontally provided on a front side of the longitudinal base plate (701); a plurality of arm plate position sensors (704) are arranged at intervals, along a length direction of the longitudinal base plate (701), on the longitudinal base plate (701) located below the transverse transmission belt (703); a conveying end of the transverse transmission belt (703) is adapted and corresponds to the microplate inlet of the incubator (501) ; a longitudinal arm plate (705) is fixed to the transverse transmission belt (703); a longitudinal driving motor (706) is provided on one end of the longitudinal arm plate (705); an end of a working shaft of the longitudinal driving motor (706) is connected to a synchronously rotating leadscrew (707) located on a front side of the longitudinal arm plate (705) through a coupling; an axial direction of the synchronously rotating leadscrew (707) is consistent with a length direction of the longitudinal arm plate (705); the synchronously rotating leadscrew (707) is provided with a leadscrew nut (708) sliding vertically; a height positioning plate in a direction consistent with a length direction of the synchronously rotating leadscrew (707) is provided on the longitudinal arm plate (705); the leadscrew nut (708) is provided with a microplate transfer support bracket and a nut position sensor (709) that is adapted to the height positioning plate; the microplate transfer support bracket comprises a microplate transfer cantilever arm (715) that is fixedly connected to the leadscrew nut (708) and extends horizontally forward; a microplate transfer bracket (716) matching the inlet door opening (516) is fixed horizontally on the microplate transfer cantilever arm (715); a bracket in-position sensor (717) is provided on a side of the microplate transfer bracket (716).

11. The fully automatic microorganism identification and drug sensitivity analysis system according to claim 2 or 3, **characterized in that**, the microplate supporting device comprises a supporting base (224); a rotating spindle (226) driven by a base plate driving motor (225) vertically penetrates the supporting base (224); an upper end of the rotating spindle (226) is fixedly connected to a center of a bottom surface of a supporting base plate (227) arranged horizontally; two microplate supporting assemblies are fixed side by side on the supporting base plate (227); each microplate supporting assembly comprises a set of microplate supporting racks (228) and a set of microplate cover clamping racks (229); a height of the microplate cover clamping rack (229) is greater than a height of the microplate supporting rack (228); the microplate supporting racks (228) and the microplate cover clamping racks (229) of each of the two microplate supporting assemblies are staggered;

12. The fully automatic microorganism identification and drug sensitivity analysis system according to claim 11, **characterized in that**, the pipette tip mounting/dismounting device comprises a waste pipette tip bin (234) provided on a front side of the microplate supporting device; a waste pipette tip storage box (235) drawn out or put in from a front side of the whole housing (1) is provided in the waste pipette tip bin (234); a pipette tip dropping opening (236) is provided on a top wall of the waste pipette tip bin (234); a support table (238) having an upper surface provided with the pipette tip accommodating box (237) is provided above the pipette tip dropping opening (236); the support table (238) is provided with a gourd-shaped pipette tip removal opening (239) corresponding to the pipette tip dropping opening (236).

13. The fully automatic microorganism identification and drug sensitivity analysis system according to claim 2 or 3, **characterized in that**, the pipette tip mounting/dismounting device comprises a waste pipette tip bin (234) provided on a front side of the microplate supporting device; a waste pipette tip storage box (235) drawn out or put in from a front side of the whole housing (1) is provided in the waste pipette tip bin (234); a pipette tip dropping opening (236) is provided on a top wall of the waste pipette tip bin (234); a support table (238) having an upper surface provided with the pipette tip accommodating box (237) is provided above the pipette tip dropping opening (236); the support table (238) is provided with a gourd-shaped pipette tip removal opening (239) corresponding to the pipette tip dropping opening (236).

14. The fully automatic microorganism identification and drug sensitivity analysis system according to any one of claims 1 to 10, **characterized in that**, the sample addition unit (2), the sample identification and recording unit (3), the microplate carrying unit (4), the incubation unit (5), the testing unit (6) and the microplate transfer unit (7) are separately controlled by a programmable logic controller (PLC).

## Patentansprüche

1. Vollautomatisches System zur Identifizierung von Mikroorganismen und Analyse von Wirkstoffsensitivität, umfassend ein Gesamtgehäuse (1), **dadurch gekennzeichnet, dass** eine Probenzufügungseinheit (2), eine Probenidentifizierungs- und -erfassungseinheit (3), eine Mikroplattentrageinheit (4), eine Inkubationseinheit (5), eine Testeinheit (6) und eine Mikroplattenübertragungseinheit (7) in einer Innenkammer des Gesamtgehäuses (1) bereitgestellt sind; die Probenzufügungseinheit (2) automatisch das Montieren/Demontieren einer Pipettenspitze, Aspirieren eines Pipettenkörpers und Zufügen der Probe auf eine Mikroplatte (406) ausführt; die Probenidentifizierungs- und -erfassungseinheit (3) auf einer Seite der Probenzufügungseinheit (2) angeordnet ist und eine mit einer Probe gefüllte Probenflasche (306) scannt, erfasst und automatisch auswählt; die Probenidentifizierungs- und -erfassungseinheit (3) ein ringförmiges Tablett (305) umfasst, eine Mehrzahl von Klemmnuten (307) zum Einsetzen von Probenflaschen (306) gleichmäßig auf einem Umfang des ringförmigen Tabletts (305) verteilt ist und ein Patienteninformationsstrichcode (309) auf eine äußere Seitenwand der Probenflasche (306) geklebt ist; ein Strichcodescanner (310), der der Position des Patienteninformationsstrichcodes (309) auf einer beliebigen Probenflasche (306) entspricht, außerhalb des ringförmigen Tabletts (305) an der Probentragbasis (301) starr bereitgestellt ist;
die Mikroplattentrageinheit (4) auf der anderen Seite der Probenzufügungseinheit (2) angeordnet ist und zum Laden, Scannen und Erfassen der Mikroplatte (406) verwendet wird; die Mikroplattentrageinheit (4) einen Mikroplattenfreigabemechanismus umfasst; der Mikroplattenfreigabemechanismus eine Mikroplattentropföffnung (418) umfasst, ein U-förmiger Durchgangsschlitz (420), der einer Position eines Informationsstrichcodes (419) auf der Mikroplatte (406) entspricht, auf einer Seite der Mikroplattentropföffnung (418) bereitgestellt ist, um mit einem externen Scanmechanismus zusammenzuwirken, um die Mikroplatte (406) zu scannen und die Informationen zu speichern und zu erfassen;
die Inkubationseinheit (5) die Mikroplatte (406) nach der Zufügung der Probe inkubiert; die Testeinheit (6) die Identifikation und das Testen auf Wirkstoffsensitivität auf der Mikroplatte (406) nach deren Inkubieren ausführt; die Mikroplattenübertragungseinheit (7) eine Längsarmplatte (705) umfasst, die sich linear entlang einer X-Achsen-Richtung bewegt; die Mikroplattentrageinheit (4), die Probenzufügungseinheit (2) und die Inkubationseinheit (5) nacheinander auf einem X-Achsen-Bewegungsweg der Längsarmplatte (705) bereitgestellt sind; die Längsarmplatte (705) einen Mikroplattenübertragungskragarm (715) umfasst, der sich entlang einer Y-Achsen-Richtung bewegt;
die Mikroplattentrageinheit (4) die Mikroplatte (406) in dem Mikroplattenfreigabemechanismus scannt und die Probenidentifizierungs- und -erfassungseinheit (3) gleichzeitig die auf dem ringförmigen Tablett (305) platzierten Probenflaschen (306) scannt; das System automatisch Kategorieinformationen der Mikroplatte (406) und der Probenflasche (306) abgleicht; nachdem das Abgleichen erfolgreich war, die Mikroplattenübertragungseinheit (7) die Mikroplatte (406) aus einer Mikroplattentrageinheit (4) herausnimmt; das System dann automatisch die entsprechende Probenflasche (306) gemäß den Kategorieinformationen der Mikroplatte (406) auswählt; sich eine Pipette zur Aspiration zur Zielprobenflasche (306) bewegt; die Pipette dann zu der Mikroplatte (406) läuft, um die Flüssigkeit hinzuzufügen, wobei, nachdem die Probenzufügung abgeschlossen ist, die Mikroplattenübertragungseinheit (7) die Mikroplatte (406) aufnimmt und sie zur Inkubation zur Inkubationseinheit (5) transportiert; nachdem die Inkubation abgeschlossen ist, die Testeinheit (6) die Mikroplatte (406) aus dem Inneren der Inkubationseinheit (5) zur Identifizierung und zum Testen auf Wirkstoffsensitivität entfernt; nach dem Testen die Mikroplatte (406) in eine Ausgangsposition in der Inkubationseinheit (5) zurückgebracht wird und Testdaten auf dem Rechner angezeigt werden.

2. Vollautomatisches System zur Identifizierung von Mikroorganismen und Analyse von Wirkstoffsensitivität nach Anspruch 1, **dadurch gekennzeichnet, dass** die Probenzufügungseinheit (2) einen in dem Gesamtgehäuse (1) bereitgestellten Tragrahmen (201) und eine Rückplatte (202), die längs zwischen zwei Stützen auf einer Rückseite des Tragrahmens (201) befestigt ist, umfasst; ein X-Achsen-Synchronriementransmissionsmechanismus (204), angetrieben von einem X-Achsen-Motor (203), horizontal auf einer Rückseite der Rückplatte (202) bereitgestellt ist; ein Synchronriemen des X-Achsen-Synchronriementransmissionsmechanismus (204) starr mit einem sich horizontal nach vom erstreckenden Kragarm (205) verbunden ist; ein Y-Achsen-Synchronriementransmissionsmechanismus (207), angetrieben von einem Y-Achsen-Motor (206), horizontal an dem Kragarm (205) bereitgestellt ist; ein Synchronriemen des Y-Achsen-Synchronriementransmissionsmechanismus (207) starr mit einem sich vertikal nach unten erstreckenden Probenzufügungsarm (208) verbunden ist; ein Z-Achsen-Synchronriementransmissionsmechanismus (210), angetrieben von einem Z-Achsen-Motor (209), längs an dem Probenzufügungsarm (208) bereitgestellt ist; ein Synchronriemen des Z-Achsen-Synchronriementransmissionsmechanismus (210) starr mit einer Pipette mit einer sich vertikal nach unten erstreckenden Aspirationsöffnung verbunden ist; eine Mikroplattentragvorrichtung und eine Pipettenspitzenmontage- / -demontagevorrichtung unter einer Bewegungsbahn des Probenzufügungsarms (208) bereitgestellt sind.

3. Vollautomatisches System zur Identifizierung von Mikroorganismen und Analyse von Wirkstoffsensitivität nach Anspruch 2, **dadurch gekennzeichnet, dass** die Pipette einen an dem Synchronriemen des Z-Achsen-Synchronriementransmissionsmechanismus (210) befestigten Aspirationspumpenmotor (219) umfasst; sich eine Arbeitswelle des Aspirationspumpenmotors (219) vertikal nach unten erstreckt und eine sich synchron drehende Antriebsgewindespindel (220) durch eine Kupplung starr mit einem unteren Ende der Arbeitswelle verbunden ist; die Antriebsgewindespindel (220) mit einer Gewindespindelmutter (221) versehen ist, die sich vertikal entlang einer Längenrichtung der Antriebsgewindespindel (220) bewegt; eine starr mit einem Gehäuse des Aspirationspumpenmotors (219) verbundene Aspirationspumpenpipette (222) vom Kolbentyp unter der Antriebsgewindespindel (220) vertikal nach unten bereitgestellt ist; eine Kolbenstange an einem oberen Ende der Aspirationspumpenpipette (222) vom Kolbentyp starr mit der Gewindespindelmutter (221) verbunden ist und eine Einwegpipettenspitze (223), angeordnet in einer Pipettenspitzenaufbewahrungsbox (237), bewegbar an eine Aspirationsöffnung an einem unteren Ende der Aspirationspumpenpipette (222) vom Kolbentyp geklemmt ist.

4. Vollautomatisches System zur Identifizierung von Mikroorganismen und Analyse von Wirkstoffsensitivität nach Anspruch 2, **dadurch gekennzeichnet, dass** die Probenidentifizierungs- und -erfassungseinheit (3) eine unter der Bewegungsbahn des Probenzufügungsarms (208) bereitgestellte Probentragbasis (301) umfasst; eine von einem Motor (302) der Identifizierungs- und Erfassungseinheit angetriebene Probentablettdrehwelle (303) die Probentragbasis (301) vertikal durchdringt; eine Probenflaschentablett-Verbindungsplatte (304) horizontal starr mit einem oberen Ende der Probentablettdrehwelle (303) verbunden ist; ein ringförmiges Tablett (305) bewegbar auf der Probenflaschentablett-Verbindungsplatte (304) platziert ist; eine Mehrzahl von Klemmnuten (307) zum Einsetzen der Probenflaschen (306) gleichmäßig auf einem Umfang des ringförmigen Tabletts (305) verteilt ist; ein Produktherstellungsstrichcode (308) und ein Patienteninformationsstrichcode (309) auf eine innere Seitenwand der Probenflasche (306), der Probentablettdrehwelle (303) zugewandt, beziehungsweise eine äußere Seitenwand der Probenflasche (306), der Außenseite des ringförmigen Tabletts (305) zugewandt, geklebt sind; Strichcodescanner (310), die Positionen des Produktherstellungsstrichcodes (308) und des Patienteninformationsstrichcodes (309) auf einer beliebigen Probenflasche (306) entsprechen, starr innerhalb beziehungsweise außerhalb des ringförmigen Tabletts (305) auf der Probentragbasis (301) bereitgestellt sind; eine ringförmige Codescheibe (311) starr mit einer Unterseite der Probenflaschentablett-Verbindungsplatte (304) verbunden ist; die auf einer Seite der ringförmigen Codescheibe (311) angeordnete Probentragbasis (301) mit einem Codescheibenausgangspositionssensor (312) und einem Codescheibenskalenpositionssensor (313) versehen ist.

5. Vollautomatisches System zur Identifizierung von Mikroorganismen und Analyse von Wirkstoffsensitivität nach Anspruch 2, **dadurch gekennzeichnet, dass** die Mikroplattentrageinheit (4) eine starre Basis (401) umfasst, die auf einer Seite der Mikroplattentragvorrichtung bereitgestellt ist; die starre Basis (401) durch ein Paar in Abständen angeordneter Längstragplatten (402) starr mit einem Mikroplattenfreigabemechanismus verbunden ist; der Mikroplattenfreigabemechanismus eine untere Abdeckung (404) umfasst, die horizontal an den zwei Längstragplatten (402) befestigt ist; die untere Abdeckung (404) mit einer Mikroplattenfreigabeöffnung (405) versehen ist; eine öffenbare/schließbare Platte mit einer rechteckigen Ringstruktur durch einen an der unteren Abdeckung (404) befestigten Führungsstift (407) bewegbar an einen oberen Rand der Mikroplattenfreigabeöffnung (405) geklemmt ist; die öffenbare/schließbare Platte durch Anliegen eines Paares U-förmiger dünner Platten (408), die sich in entgegengesetzten Richtungen aufeinander zu bewegen, ausgebildet ist; angrenzende Verbindungen der zwei U-förmigen dünnen Platten (408) durch eine sich drehende Hülse (409) verbunden sind, um eine einzige Einheit auszubilden; ein Satz von Klemmklauen (411) symmetrisch auf gegenüberliegenden Seiten von dünnen Unterwandplatten der zwei U-förmigen dünnen Platten (408) bereitgestellt ist; eine von den U-förmigen dünnen Platten (408) mit einer Rückholfeder (412) mit einem äußeren Ende, das mit der unteren Abdeckung (404) verbunden ist, versehen ist; eine Dehnungsrichtung der Rückholfeder (412) mit einer Öffnungs-/Schließrichtung der U-förmigen dünnen Platte (408) übereinstimmt; ein Mikroplattenfreigabemotor (413) an einer Unterseite der unteren Abdeckung (404) befestigt ist; eine Mikroplattenfreigabe-Gewindespindel (414) koaxial an einer Arbeitswelle des Mikroplattenfreigabemotors (413) befestigt ist; eine axiale Richtung der Mikroplattenfreigabe-Gewindespindel (414) mit der Öffnungs-/Schließrichtung der zwei U-förmigen dünnen Platten (408) übereinstimmt; die Mikroplattenfreigabe-Gewindespindel (414) mit einem Mutternsitz (415) versehen ist, der dazu verwendet wird, die zwei U-förmigen dünnen Platten (408) anzutreiben, sodass sie sich öffnen und schließen; ein Paar von Hubpositionssensoren (416) zum Überwachen eines Bewegungshubs des Mutternsitzes (415) in Abständen auf dem Mikroplattenfreigabemotor (413) angeordnet ist; eine starr mit der unteren Abdeckung (404) verbundene Verbindungsbasis (417) über den zwei U-förmigen dünnen Platten (408) befestigt ist; die Verbindungsbasis (417) mit einer Mikroplattentropföffnung (418) versehen ist, die der Mikroplattenfreigabeöffnung (405) entspricht; ein U-förmiger Durchgangsschlitz (420), der der Position des Informationsstrichcodes (419) auf der Mikroplatte (406) entspricht, auf einer Seite der Mikroplattentropföffnung (418) bereitgestellt ist; ein Mikroplattenstapelmechanismus an dem Mikroplattenfreigabemechanismus bereitgestellt ist; der Mikroplattenstapelmechanismus Haltestützen (421) umfasst, die an vier Ecken der Mikroplattentropföffnung (418) vertikal befestigt sind; obere Enden der Haltestützen (421) durch eine verbindende obere Platte (422) verbunden sind, um eine einzige Einheit auszubilden, um einen an die Mikroplatte (406) angepassten Mikroplattenstapelbehälter (423) zu definieren; eine Tür (425) mit magnetischer Anziehung mit einem Griff (424) auf einer Seite des Mikroplattenstapelbehälters (423) drehgelenkig angebracht ist; ein Hall-Sensor an der Haltestütze (421), die an die Tür (425) mit magnetischer Anziehung angezogen wird, installiert ist.

6. Vollautomatisches System zur Identifizierung von Mikroorganismen und Analyse von Wirkstoffsensitivität nach Anspruch 2, **dadurch gekennzeichnet, dass** die Inkubationseinheit (5) einen auf einer Seite der Probenzufügungseinheit (2) bereitgestellten Inkubator (501) umfasst; in dem Inkubator (501) eine Inkubationsbasis (502) bereitgestellt ist; auf einer Oberseite der Inkubationsbasis (502) ein dünnwandiges Lager (503) horizontal bereitgestellt ist; ein Innenring des dünnwandigen Lagers (503) starr mit der Inkubationsbasis (502) verbunden ist und eine angetriebene Riemenscheibe (505), die von einem Inkubationsmotor (504) angetrieben wird, starr auf einen äußeren Ring des dünnwandigen Lagers (503) aufgeschoben ist; eine Oberseite der angetriebenen Riemenscheibe (505) starr mit einem horizontalen Inkubationstablett (506), das koaxial angeordnet ist, verbunden ist; eine Mehrzahl von Inkubationsregalen (507) mit nach außen gerichteten Öffnungen gleichmäßig entlang einer Umfangsrichtung des horizontalen Inkubationstabletts (506) verteilt ist; eine Mehrzahl von Schichten von Mikroplattenklemmnuten (508) längs in Abständen in dem Inkubationsregal (507) angeordnet ist; jedes Inkubationsregal (507) auf einer Oberseite des horizontalen Inkubationstabletts (506) durch einen Stift befestigt ist; ein Mikroplatteneinlass und ein Mikroplattenauslass (515) an Seitenwänden des Inkubators (501) bereitgestellt sind; der Mikroplatteneinlass eine Mehrzahl von Einlasstüröffnungen (516), die in Abständen längs angeordnet sind, umfasst; die Einlasstüröffnungen (516) in einer Eins-zu-eins-Entsprechung mit den Mikroplattenklemmnuten (508) vorliegen; eine Drücktür (518) durch ein automatisches Rückfederungsscharnier (517) drehgelenkig an der Einlasstüröffnung (516) angebracht ist; der Mikroplattenauslass (515) in abgedichteter Verbindung mit einer Vorderseitenwand des Gesamtgehäuses (1) steht; eine Größe des Mikroplattenauslasses (515) an eine Größe der nach außen gerichteten Öffnung des Inkubationsregals (507) angepasst ist; eine Inkubatortür (519) drehgelenkig an der Vorderseitenwand des Gesamtgehäuses (1) entsprechend dem Mikroplattenauslass (515) angebracht ist; ein Heizgebläse (522) mit einem Heizdraht (521) an einer oberen Wand des Inkubators (501) bereitgestellt ist; ein Temperatursensor in dem Inkubator (501) bereitgestellt ist; ein Inkubationsinformationsanzeigebildschirm (523) auf der Vorderseitenwand des Gesamtgehäuses (1) unter der Inkubatortür (519) bereitgestellt ist.

7. Vollautomatisches System zur Identifizierung von Mikroorganismen und Analyse von Wirkstoffsensitivität nach Anspruch 6, **dadurch gekennzeichnet, dass** an der Inkubationsbasis (502) ein Getriebe (512) bereitgestellt ist; das Getriebe (512) durch eine Befestigungsplatte (513) starr mit einer Unterseite der Inkubationsbasis (502) verbunden ist; sich ein Ausgangsende des Getriebes (512) vertikal nach oben zu einer Stelle oberhalb der Inkubationsbasis (502) erstreckt und eine treibende Riemenscheibe (514) am Ausgangsende des Getriebes (512) bereitgestellt ist; die treibende Riemenscheibe (514) durch einen Transmissionsriemen treibend mit der angetriebenen Riemenscheibe (505) verbunden ist; ein Eingangsende des Getriebes (512) durch einen synchronen Transmissionsmechanismus treibend mit dem Inkubationsmotor (504) verbunden ist; eine Mehrzahl von Inkubationsinformationsanzeigeleuchten (520) an einem Rand des Mikroplattenauslasses (515) entsprechend einer Öffnungsseite der Inkubatortür (519) bereitgestellt ist; die Inkubationsinformationsanzeigeleuchten (520) in einer Eins-zu-eins-Entsprechung mit den Mikroplattenklemmnuten (508) in dem Inkubationsregal (507) vorliegen.

8. Vollautomatisches System zur Identifizierung von Mikroorganismen und Analyse von Wirkstoffsensitivität nach Anspruch 6, **dadurch gekennzeichnet, dass** die Testeinheit (6) eine Testbasis (601), bereitgestellt an einer zentralen Position auf einer Innenseite der Inkubationsregale (507), umfasst; an der Testbasis (601) eine erste Führungsschiene (602) längs bereitgestellt ist; ein durch einen ersten Antriebsmechanismus (603) zum Anheben und Absenken angetriebener Informationserfassungsmechanismus verschiebbar auf der ersten Führungsschiene (602) bereitgestellt ist; an der Testbasis (601) ein Gegengewichtsmechanismus bereitgestellt ist, um zu verhindern, dass der Informationserfassungsmechanismus herabfällt; der Informationserfassungsmechanismus einen horizontalen Hubrahmen (604) umfasst, der verschiebbar an der ersten Führungsschiene (602) bereitgestellt ist; in dem horizontalen Hubrahmen (604) eine zweite Führungsschiene (605) horizontal bereitgestellt ist und sich nahe an einer langen Seitenwand des horizontalen Hubrahmens (604) befindet; ein von einem zweiten Antriebsmechanismus (606) angetriebener Schieber (607) verschiebbar an der zweiten Führungsschiene (605) bereitgestellt ist; eine Tablettverbindungsblock (608) horizontal starr mit einer Seite des Schiebers (607) verbunden ist; ein Testtablett (609) starr mit einer Seite des Tablettverbindungsblocks (608), entfernt von dem Schieber (607), verbunden ist; das Testtablett (609) durch eine Tablettzugangsöffnung (611) auf einer kurzen Seitenwand des horizontalen Hubrahmens (604) verläuft; ein Lichtleitfaser-Befestigungsblock (612) an einem unteren Rand der Tablettzugangsöffnung (611) bereitgestellt ist; eine lichtemittierende Diodenleuchte (LED) (613) an einer Unterseite des horizontalen Hubrahmens (604) bereitgestellt ist; die lichtemittierende Diodenleuchte (LED) (613) durch eine Lichtleitfaser (614) über den Lichtleitfaser-Befestigungsblock (612) auf das Testtablett (609) einstrahlt; ein Umwandlungsmodul (615) für fotoelektrische Signale eine Oberseite des horizontalen Hubrahmens (604) bedeckt.

9. Vollautomatisches System zur Identifizierung von Mikroorganismen und Analyse von Wirkstoffsensitivität nach Anspruch 8, **dadurch gekennzeichnet, dass** der Gegengewichtsmechanismus einen umgekehrt U-förmigen Rahmen (616) umfasst, der längs an der Testbasis (601) bereitgestellt ist; die erste Führungsschiene (602) und der Informationserfassungsmechanismus im Inneren des umgekehrt U-förmigen Rahmen (616) angeordnet sind; eine dritte Führungsschiene (617) auf der Testbasis (601) auf einer hinteren Seite des umgekehrt U-förmigen Rahmens (616) längs bereitgestellt ist; an dem horizontalen Hubrahmen (604) eine hängende Welle (618), angeordnet über dem Umwandlungsmodul (615) für fotoelektrische Signale, bereitgestellt ist; die hängende Welle (618) horizontal entlang einer Breitenrichtung des umgekehrt U-förmigen Rahmens (616) bereitgestellt ist; ein Stahlseil (619), dessen eines Ende an der hängenden Welle (618) befestigt ist, um eine starre Riemenscheibe (620) auf einer Oberseite des umgekehrt U-förmigen Rahmens (616) verläuft und starr mit einem verschiebbar an der dritten Führungsschiene (617) bereitgestellten Gegengewicht (621) verbunden ist.

10. Vollautomatisches System zur Identifizierung von Mikroorganismen und Analyse von Wirkstoffsensitivität nach Anspruch 6, **dadurch gekennzeichnet, dass** die Mikroplattenübertragungseinheit (7) eine auf einer Vorderseite der Rückplatte (202) angebrachte und befestigte Längsgrundplatte (701) umfasst; ein Quertransmissionsriemen (703), angetrieben von einem Querantriebsmotor (702), horizontal auf einer Vorderseite der Längsgrundplatte (701) bereitgestellt ist; eine Mehrzahl von Armplattenpositionssensoren (704) in Abständen entlang einer Längenrichtung der Längsgrundplatte (701) an der Längsgrundplatte (701), angeordnet unterhalb des Quertransmissionsriemens (703), angeordnet ist; ein Förderende des Quertransmissionsriemens (703) an den Mikroplatteneinlass des Inkubators (501) angepasst ist und diesem entspricht; eine Längsarmplatte (705) an dem Quertransmissionsriemen (703) befestigt ist; ein Längsantriebsmotor (706) an einem Ende der Längsarmplatte (705) bereitgestellt ist; ein Ende einer Arbeitswelle des Längsantriebsmotors (706) mit einer sich synchron drehenden Gewindespindel (707), angeordnet auf einer Vorderseite der Längsarmplatte (705), durch eine Kupplung verbunden ist; eine axiale Richtung der sich synchron drehenden Gewindespindel (707) mit einer Längenrichtung der Längsarmplatte (705) übereinstimmt; die sich synchron drehende Gewindespindel (707) mit einer sich vertikal verschiebenden Gewindespindelmutter (708) versehen ist; eine Höhenpositionierungsplatte in einer Richtung, die mit einer Längenrichtung der sich synchron drehenden Gewindespindel (707) übereinstimmt, an der Längsarmplatte (705) bereitgestellt ist; die Gewindespindelmutter (708) mit einem Mikroplattenübertragungstraghalter und einem Mutternpositionssensor (709), der an die Höhenpositionierungsplatte angepasst ist, versehen ist; der Mikroplattenübertragungstraghalter einen Mikroplattenübertragungskragarm (715) umfasst, der starr mit der Gewindespindelmutter (708) verbunden ist und sich horizontal nach vom erstreckt; ein Mikroplattenübertragungshalter (716), der zur Einlasstüröffnung (516) passt, horizontal an dem Mikroplattenübertragungskragarm (715) befestigt ist; ein Halter-in-Position-Sensor (717) auf einer Seite des Mikroplattenübertragungshalters (716) bereitgestellt ist.

11. Vollautomatisches System zur Identifizierung von Mikroorganismen und Analyse von Wirkstoffsensitivität nach Anspruch 2 oder 3, **dadurch gekennzeichnet, dass** die Mikroplattentragvorrichtung eine Tragbasis (224) umfasst; eine sich drehende Spindel (226), angetrieben von einem Grundplattenantriebsmotor (225), die Tragbasis (224) vertikal durchdringt; ein oberes Ende der sich drehenden Spindel (226) starr mit einer Mitte einer Unterseite einer tragenden Grundplatte (227), die horizontal angeordnet ist, verbunden ist; zwei Mikroplattentraganordnungen nebeneinander auf der Tragbasisplatte (227) befestigt sind; jede Mikroplattentraganordnung einen Satz von Mikroplattentraggestellen (228) und einen Satz von Mikroplattenabdeckklemmgestellen (229) umfasst; eine Höhe des Mikroplattenabdeckklemmgestells (229) größer als eine Höhe des Mikroplattentraggestells (228) ist; die Mikroplattentraggestelle (228) und die Mikroplattenabdeckklemmgestelle (229) jeder der zwei Mikroplattentraganordnungen versetzt sind.

12. Vollautomatisches System zur Identifizierung von Mikroorganismen und Analyse von Wirkstoffsensitivität nach Anspruch 11, **dadurch gekennzeichnet, dass** die Pipettenspitzenmontage- / -demontagevorrichtung einen Abfallpipettenspitzenbehälter (234) umfasst, bereitgestellt an einer Vorderseite der Mikroplattentragvorrichtung; eine Abfallpipettenspitzenaufbewahrungsbox (235), ausgezogen oder eingesetzt von einer Vorderseite des Gesamtgehäuses (1) her, in dem Abfallpipettenspitzenbehälter (234) bereitgestellt ist; eine Pipettenspitzentropföffnung (236) an einer oberen Wand des Abfallpipettenspitzenbehälters (234) bereitgestellt ist; ein Tragtisch (238) mit einer Oberseite, die mit der Pipettenspitzenaufbewahrungsbox (237) versehen ist, über der Pipettenspitzentropföffnung (236) bereitgestellt ist; der Tragtisch (238) mit einer kürbisförmigen Pipettenspitzenentfernungsöffnung (239) versehen ist, die der Pipettenspitzentropföffnung (236) entspricht.

13. Vollautomatisches System zur Identifizierung von Mikroorganismen und Analyse von Wirkstoffsensitivität nach Anspruch 2 oder 3, **dadurch gekennzeichnet, dass** die Pipettenspitzenmontage- / -demontagevorrichtung einen Abfallpipettenspitzenbehälter (234) umfasst, bereitgestellt an einer Vorderseite der Mikroplattentragvorrichtung; eine Abfallpipettenspitzenaufbewahrungsbox (235), ausgezogen oder eingesetzt von einer Vorderseite des Gesamtgehäuses (1) her, in dem Abfallpipettenspitzenbehälter (234) bereitgestellt ist; eine Pipettenspitzentropföffnung (236) an einer oberen Wand des Abfallpipettenspitzenbehälters (234) bereitgestellt ist; ein Tragtisch (238) mit einer Oberseite, die mit der Pipettenspitzenaufbewahrungsbox (237) versehen ist, über der Pipettenspitzentropföffnung (236) bereitgestellt ist; der Tragtisch (238) mit einer kürbisförmigen Pipettenspitzenentfernungsöffnung (239) versehen ist, die der Pipettenspitzentropföffnung (236) entspricht.

14. Vollautomatisches System zur Identifizierung von Mikroorganismen und Analyse von Wirkstoffsensitivität nach einem der Ansprüche 1 bis 10, **dadurch gekennzeichnet, dass** die Probenzufügungseinheit (2), die Probenidentifizierungs- und -erfassungseinheit (3), die Mikroplattentrageinheit (4), die Inkubationseinheit (5), die Testeinheit (6) und die Mikroplattenübertragungseinheit (7) separat von einer speicherprogrammierbaren Steuerung (*programmable logic controller* - PLC) gesteuert werden.

## Revendications

1. Système d'identification de micro-organismes entièrement automatique et d'analyse de sensibilité aux médicaments, comprenant un boîtier entier (1), **caractérisé en ce qu'**une unité d'ajout d'échantillon (2), une unité d'identification et d'enregistrement d'échantillon (3), une unité de port de microplaque (4), une unité d'incubation (5), une unité de test (6) et une unité de transfert de microplaque (7) sont prévues dans une chambre interne du boîtier entier (1) ; l'unité d'ajout d'échantillon (2) réalise automatiquement le montage/démontage d'une pointe de pipette, l'aspiration d'un corps de pipette et l'ajout d'échantillon sur une microplaque (406) ; l'unité d'identification et d'enregistrement d'échantillon (3) est située sur un côté de l'unité d'ajout d'échantillon (2) et numérise, enregistre et sélectionne automatiquement un flacon d'échantillon (306) rempli d'un échantillon ; l'unité d'identification et d'enregistrement d'échantillon (3) comporte un plateau annulaire (305), une pluralité de rainures de serrage (307) pour insérer des flacons d'échantillon (306) sont réparties uniformément sur une circonférence du plateau annulaire (305), un code-barres d'informations de patient (309) est collé sur une paroi latérale extérieure du flacon d'échantillon (306) ; un lecteur de codes-barres (310) correspondant à la position du code-barres d'informations de patient (309) sur un quelconque flacon d'échantillon (306) est prévu de manière fixe à l'extérieur du plateau annulaire (305) sur la base de support d'échantillon (301) ;
l'unité de port de microplaque (4) est située sur l'autre côté de l'unité d'ajout d'échantillon (2), et est utilisée pour charger, numériser et enregistrer la microplaque (406) ; l'unité de port de microplaque (4) comporte un mécanisme de libération de microplaque ; le mécanisme de libération de microplaque comporte une ouverture de chute de microplaque (418), une fente traversante en forme de U (420) correspondant à une position d'un code-barres d'informations (419) sur la microplaque (406) est prévue sur un côté de l'ouverture de chute de microplaque (418) afin de coopérer avec un mécanisme de numérisation externe pour numériser la microplaque (406) et pour stocker et enregistrer les informations ;
l'unité d'incubation (5) incube la microplaque (406) après l'ajout d'échantillon ; l'unité de test (6) réalise l'identification et le test de sensibilité aux médicaments sur la microplaque (406) après avoir été incubée ; l'unité de transfert de microplaque (7) comprend une plaque de bras longitudinale (705) se déplaçant linéairement le long d'une direction d'axe X ; l'unité de port de microplaque (4), l'unité d'ajout d'échantillon (2) et l'unité d'incubation (5) sont prévues de manière séquentielle sur un trajet de déplacement d'axe X de la plaque de bras longitudinale (705) ; la plaque de bras longitudinale (705) comprend un bras en porte-à-faux de transfert de microplaque (715) se déplaçant le long d'une direction d'axe Y ;
l'unité de port de microplaque (4) numérise la microplaque (406) dans le mécanisme de libération de microplaque, et l'unité d'identification et d'enregistrement d'échantillon (3) numérise en même temps les flacons d'échantillon (306) placés sur le plateau annulaire (305) ; le système associe automatiquement les informations de catégorie de la microplaque (406) et du flacon d'échantillon (306) ; une fois que l'association a réussi, l'unité de transfert de microplaque (7) retire la microplaque (406) d'une unité de port de microplaque (4) ; puis le système sélectionne automatiquement le flacon d'échantillon correspondant (306) en fonction des informations de catégorie de la microplaque (406) ; une pipette se déplace vers le flacon d'échantillon cible (306) pour l'aspiration ; puis la pipette avance vers la microplaque (406) pour ajouter le liquide, où une fois que l'ajout d'échantillon est terminé, l'unité de transfert de microplaque (7) porte la microplaque (406) et transporte vers l'unité d'incubation (5) pour l'incubation ; une fois que l'incubation est terminée, l'unité de test (6) enlève la microplaque (406) de l'intérieur de l'unité d'incubation (5) pour l'identification et le test de sensibilité aux médicaments ; après le test, la microplaque (406) est replacée dans une position originale dans l'unité d'incubation (5) et des données de test sont affichées sur l'ordinateur.

2. Système d'identification de micro-organismes entièrement automatique et d'analyse de sensibilité aux médicaments selon la revendication 1, **caractérisé en ce que** l'unité d'ajout d'échantillon (2) comprend un cadre de support (201) prévu dans le boîtier entier (1) et une plaque arrière (202) fixée longitudinalement entre deux montants sur un côté arrière du cadre de support (201) ; un mécanisme de transmission à courroie synchrone d'axe X (204) entraîné par un moteur d'axe X (203) est prévu horizontalement sur un côté arrière de la plaque arrière (202) ; une courroie synchrone du mécanisme de transmission à courroie synchrone d'axe X (204) est reliée de manière fixe à un bras en porte-à-faux (205) qui s'étend horizontalement vers l'avant ; un mécanisme de transmission à courroie synchrone d'axe Y (207) entraîné par un moteur d'axe Y (206) est prévu horizontalement sur le bras en porte-à-faux (205) ; une courroie synchrone du mécanisme de transmission à courroie synchrone d'axe Y (207) est reliée de manière fixe à un bras d'ajout d'échantillon (208) qui s'étend verticalement vers le bas ; un mécanisme de transmission à courroie synchrone d'axe Z (210) entraîné par un moteur d'axe Z (209) est prévu longitudinalement sur le bras d'ajout d'échantillon (208) ; une courroie synchrone du mécanisme de transmission à courroie synchrone d'axe Z (210) est reliée de manière fixe à une pipette avec un orifice d'aspiration qui s'étend verticalement vers le bas ; un moyen de support de microplaque et un moyen de montage/démontage de pointe de pipette sont prévus sous une trajectoire de déplacement du bras d'ajout d'échantillon (208).

3. Système d'identification de micro-organismes entièrement automatique et d'analyse de sensibilité aux médicaments selon la revendication 2, **caractérisé en ce que** la pipette comprend un moteur de pompe d'aspiration (219) fixé sur la courroie synchrone du mécanisme de transmission à courroie synchrone d'axe Z (210) ; un arbre de travail du moteur de pompe d'aspiration (219) s'étend verticalement vers le bas, et une vis de guidage d'entraînement en rotation synchrone (220) est reliée de manière fixe à une extrémité inférieure de l'arbre de travail par le biais d'un accouplement ; la vis de guidage d'entraînement (220) est prévue avec un écrou de vis d'entraînement (221) se déplaçant verticalement le long d'une direction en longueur de la vis de guidage d'entraînement (220) ; une pipette à pompe d'aspiration de type piston (222) reliée de manière fixe à un boîtier du moteur de pompe d'aspiration (219) est prévue verticalement vers le bas sous la vis de guidage d'entraînement (220) ; une tige de piston sur une extrémité supérieure de la pipette à pompe d'aspiration de type piston (222) est reliée de manière fixe à l'écrou de vis d'entraînement (221), et une pointe de pipette jetable (223) située dans une boîte de logement de pointe de pipette (237) est serrée de manière mobile vers un orifice d'aspiration au niveau d'un extrémité inférieure de la pipette à pompe d'aspiration de type piston (222).

4. Système d'identification de micro-organismes entièrement automatique et d'analyse de sensibilité aux médicaments selon la revendication 2, **caractérisé en ce que** l'unité d'identification et d'enregistrement d'échantillon (3) comprend une base de support d'échantillon (301) prévue sous la trajectoire de déplacement du bras d'ajout d'échantillon (208) ; un arbre de rotation de plateau d'échantillons (303) entraîné par un moteur d'unité d'identification et d'enregistrement (302) pénètre verticalement dans la base de support d'échantillon (301) ; une plaque de liaison de plateau de flacons d'échantillon (304) est reliée horizontalement de manière fixe à une extrémité supérieure de l'arbre de rotation de plateau d'échantillons (303) ; un plateau annulaire (305) est placé de manière mobile sur la plaque de liaison de plateau de flacons d'échantillon (304) ; une pluralité de rainures de serrage (307) pour insérer les flacons d'échantillon (306) sont réparties uniformément sur une circonférence du plateau annulaire (305) ; un code-barres de fabrication de produit (308) et un code-barres d'informations de patient (309) sont collés sur une paroi latérale intérieure du flacon d'échantillon (306) qui est en regard de l'arbre de rotation de plateau d'échantillons (303) et une paroi latérale extérieure du flacon d'échantillon (306) qui est en regard du côté extérieur du plateau annulaire (305), respectivement ; des lecteurs de codes-barres (310) correspondant aux positions du code-barres de fabrication de produit (308) et du code-barres d'informations de patient (309) sur un quelconque flacon d'échantillon (306) sont prévus de manière fixe à l'intérieur et à l'extérieur du plateau annulaire (305) sur la base de support d'échantillon (301), respectivement; un disque de code annulaire (311) est relié de manière fixe à une surface inférieure de la plaque de liaison de plateau de flacons d'échantillon (304) ; la base de support d'échantillon (301) située sur un côté du disque de code annulaire (311) est munie d'un capteur de position d'origine de disque de code (312) et d'un capteur de position d'échelle de disque de code (313).

5. Système d'identification de micro-organismes entièrement automatique et d'analyse de sensibilité aux médicaments selon la revendication 2, **caractérisé en ce que** l'unité de port de microplaque (4) comprend une base fixe (401) prévue sur un côté du moyen de support de microplaque ; la base fixe (401) est reliée de manière fixe à un mécanisme de libération de microplaque par le biais d'une paire de plaques de support longitudinales (402) agencées à certains intervalles ; le mécanisme de libération de microplaque comprend un couvercle de fond (404) fixé horizontalement sur les deux plaques de support longitudinales (402) ; le couvercle de fond (404) est muni d'une ouverture de libération de microplaque (405) ; une plaque ouvrable/refermable avec une structure d'anneau rectangulaire est serrée de manière mobile vers un bord supérieur de l'ouverture de libération de microplaque (405) par le biais d'une cheville de guidage (407) fixée sur le couvercle de fond (404) ; la plaque ouvrable/refermable est formée en enfonçant une paire de plaques minces en forme de U (408) qui se déplacent l'une vers l'autre dans des directions opposées ; des joints en about des deux plaques minces en forme de U (408) sont reliés par le biais d'un manchon de rotation (409) pour former une seule unité ; un ensemble de griffes de serrage (411) sont prévus symétriquement sur des côtés opposés de plaques minces de paroi de fond des deux plaques minces en forme de U (408) ; une des plaques minces en forme de U (408) est munie d'un ressort de rappel (412) présentant un bord extérieur relié au couvercle de fond (404) ; une direction d'étirement du ressort de rappel (412) est cohérente avec une direction d'ouverture/fermeture de la plaque mince en forme de U (408) ; un moteur de libération de microplaque (413) est fixé sur une surface inférieure du couvercle de fond (404) ; une vis mère de libération de microplaque (414) est fixée de manière coaxiale sur un arbre de travail du moteur de libération de microplaque (413) ; une direction axiale de la vis mère de libération de microplaque (414) est cohérente avec la direction d'ouverture/fermeture des deux plaques minces en forme de U (408) ; la vis mère de libération de microplaque (414) est munie d'un siège d'écrou (415) utilisé pour entraîner l'ouverture et la fermeture des deux plaques minces en forme de U (408) ; une paire de capteurs de position de course (416) pour surveiller une course de déplacement du siège d'écrou (415) sont agencés à certains intervalles sur le moteur de libération de microplaque (413) ; une base de liaison (417) reliée de manière fixe au couvercle de fond (404) est fixée au-dessus des deux plaques minces en forme de U (408) ; la base de liaison (417) est munie d'une ouverture de chute de microplaque (418) correspondant à l'ouverture de libération de microplaque (405) ; une fente traversante en forme de U (420) correspondant à la position du code-barres d'informations (419) sur la microplaque (406) est prévue sur un côté de l'ouverture de chute de microplaque (418) ; un mécanisme d'empilement de microplaques est prévu sur le mécanisme de libération de microplaque ; le mécanisme d'empilement de microplaques comprend des montants de retenue (421) fixés verticalement au niveau de quatre coins de l'ouverture de chute de microplaque (418) ; les extrémités supérieures des montants de retenue (421) sont reliées par une plaque de dessus de liaison (422) pour former une seule unité afin de définir un panier d'empilement de microplaques (423) adapté à la microplaque (406) ; une porte d'attraction magnétique (425) avec une poignée (424) est articulée sur un côté du panier d'empilement de microplaques (423) ; un capteur à effet Hall est installé sur le montant de retenue (421) qui est attiré vers la porte d'attraction magnétique (425).

6. Système d'identification de micro-organismes entièrement automatique et d'analyse de sensibilité aux médicaments selon la revendication 2, **caractérisé en ce que** l'unité d'incubation (5) comprend un incubateur (501) prévu sur un côté de l'unité d'ajout d'échantillon (2) ; une base d'incubation (502) est prévue dans l'incubateur (501) ; un palier à paroi mince (503) est prévu horizontalement sur une surface supérieure de la base d'incubation (502) ; un anneau intérieur du palier à paroi mince (503) est relié de manière fixe à la base d'incubation (502) et une poulie menée (505) entraînée par un moteur d'incubation (504) est emmanchée de manière fixe sur un anneau extérieur du palier à paroi mince (503) ; une surface supérieure de la poulie menée (505) est reliée de manière fixe à un plateau d'incubation horizontal (506) qui est agencé de manière coaxiale ; une pluralité de manchons d'incubation (507) avec des ouvertures vers l'extérieur sont répartis uniformément le long d'une direction circonférentielle du plateau d'incubation horizontal (506) ; une pluralité de couches de rainures de serrage de microplaque (508) sont agencées longitudinalement à certains intervalles dans l'étagère d'incubation (507) ; chaque étagère d'incubation (507) est fixée sur une surface supérieure du plateau d'incubation horizontal (506) par une cheville ; une entrée de microplaque et une sortie de microplaque (515) sont prévues sur des paros latérales de l'incubateur (501) ; l'entrée de microplaque comprend une pluralité d'ouvertures de porte d'entrée (516) agencées longitudinalement à certains intervalles ; les ouvertures de porte d'entrée (516) sont en correspondance biunivoque avec les rainures de serrage de microplaque (508) ; une porte de va-et-vient (518) est articulée sur l'ouverture de porte d'entrée (516) par le biais d'une articulation à reprise automatique (517) ; la sortie de microplaque (515) est en communication étanche avec une paroi latérale avant du boîtier entier (1) ; une dimension de la sortie de microplaque (515) est adaptée à une dimension de l'ouverture vers l'extérieur de l'étagère d'incubation (507) ; une porte d'incubateur (519) est articulée sur la paroi latérale avant du boîtier entier (1) correspondant à la sortie de microplaque (515) ; un ventilateur de chauffage (522) avec un fil de chauffage (521) est prévu sur une paroi de dessus de l'incubateur (501) ; un capteur de température est prévu dans l'incubateur (501) ; un écran d'affichage d'informations d'incubation (523) est prévu sur la paroi latérale avant du boîtier entier (1) sous la porte d'incubateur (519).

7. Système d'identification de micro-organismes entièrement automatique et d'analyse de sensibilité aux médicaments selon la revendication 6, **caractérisé en ce qu'**une transmission (512) est prévue sur la base d'incubation (502) ; la transmission (512) est reliée de manière fixe à une surface inférieure de la base d'incubation (502) par le biais d'une plaque de fixation (513) ; une extrémité de sortie de la transmission (512) s'étend verticalement vers le haut vers un emplacement au-dessus de la base d'incubation (502) et une poulie motrice (514) est prévue sur l'extrémité de sortie de la transmission (512) ; la poulie motrice (514) est reliée de manière entraînée à la poulie menée (505) par le biais d'une courroie de transmission ; une extrémité d'entrée de la transmission (512) est reliée de manière entraînée au moteur d'incubation (504) par le biais d'un mécanisme de transmission synchrone ; une pluralité de lampes témoins d'informations d'incubation (520) sont prévues sur un bord de la sortie de microplaque (515) correspondant à un côté d'ouverture de la porte d'incubateur (519) ; les lampes témoins d'informations d'incubation (520) sont en correspondance biunivoque avec les rainures de serrage de microplaque (508) dans l'étagère d'incubation (507).

8. Système d'identification de micro-organismes entièrement automatique et d'analyse de sensibilité aux médicaments selon la revendication 6, **caractérisé en ce que** l'unité de test (6) comprend une base de test (601) prévue au niveau d'une position centrale sur un côté intérieur des manchons d'incubation (507) ; un premier rail de guidage (602) est prévu longitudinalement sur la base de test (601) ; un mécanisme d'acquisition d'informations entraîné par un premier mécanisme de puissance (603) pour monter et descendre est prévu de manière coulissante sur le premier rail de guidage (602) ; un mécanisme de contrepoids est prévu sur la base de test (601) pour empêcher le mécanisme d'acquisition d'informations de tomber ; le mécanisme d'acquisition d'informations comprend un cadre de levage horizontal (604) prévu de manière coulissante sur le premier rail de guidage (602) ; un deuxième rail de guidage (605) est prévu horizontalement dans le cadre de levage horizontal (604) et est proche d'une longue paroi latérale du cadre de levage horizontal (604) ; une coulisse (607) entraînée par un second mécanisme de puissance (606) est prévue de manière coulissante sur le deuxième rail de guidage (605) ; un bloc de liaison de plateau (608) est relié horizontalement de manière fixe à un côté de la coulisse (607) ; un plateau de test (609) est relié de manière fixe à un côté du bloc de liaison de plateau (608) à distance de la coulisse (607) ; le plateau de test (609) passe à travers une ouverture d'accès de plateau (611) sur une paroi latérale courte du cadre de levage horizontal (604) ; un bloc de fixation de fibre optique (612) est prévu au niveau d'un bord inférieur de l'ouverture d'accès de plateau (611) ; une lampe à diode électroluminescente, *light-emitting diode* - LED, (613) est prévue au niveau d'un fond du cadre de levage horizontal (604) ; la lampe à diode électroluminescente, *light-emitting diode -* LED, (613) est irradiée sur le plateau de test (609) à travers une fibre optique (614) par le biais du bloc de fixation de fibre optique (612) ; un module de conversion de signal photoélectrique (615) couvre un dessus du cadre de levage horizontal (604).

9. Système d'identification de micro-organismes entièrement automatique et d'analyse de sensibilité aux médicaments selon la revendication 8, **caractérisé en ce que** le mécanisme de contrepoids comprend un cadre en forme de U inversé (616) prévu longitudinalement sur la base de test (601) ; le premier rail de guidage (602) et le mécanisme d'acquisition d'informations sont situés à l'intérieur du cadre en forme de U inversé (616) ; un troisième rail de guidage (617) est prévu longitudinalement sur la base de test (601) sur un côté arrière du cadre en forme de U inversé (616) ; un arbre de suspension (618) situé au-dessus du module de conversion de signal photoélectrique (615) est prévu sur le cadre de levage horizontal (604) ; l'arbre de suspension (618) est prévu horizontalement le long d'une direction en largeur du cadre en forme de U inversé (616) ; un câble en acier (619) avec une extrémité fixée sur l'arbre de suspension (618) se dirige autour d'une poulie fixe (620) sur un dessus du cadre en forme de U inversé (616) et est relié de manière fixe à un contrepoids (621) prévu de manière coulissante sur le troisième rail de guidage (617).

10. Système d'identification de micro-organismes entièrement automatique et d'analyse de sensibilité aux médicaments selon la revendication 6, **caractérisé en ce que** l'unité de transfert de microplaque (7) comprend une plaque de base longitudinale (701) attachée et fixée sur un côté avant de la plaque arrière (202) ; une courroie de transmission transversale (703) entraînée par un moteur d'entraînement transversal (702) est prévue horizontalement sur un côté avant de la plaque de base longitudinale (701) ; une pluralité de capteurs de position de plaque de bras (704) sont agencés à certains intervalles, le long d'une direction en longueur de la plaque de base longitudinale (701), sur la plaque de base longitudinale (701) située en dessous de la courroie de transmission transversale (703) ; une extrémité de transport de la courroie de transmission transversale (703) est adaptée et correspond à l'entrée de microplaque de l'incubateur (501) ; une plaque de bras longitudinale (705) est fixée à la courroie de transmission transversale (703) ; un moteur d'entraînement longitudinal (706) est prévu sur une extrémité de la plaque de bras longitudinale (705) ; une extrémité d'un arbre de travail du moteur d'entraînement longitudinal (706) est reliée à une vis-mère de rotation synchrone (707) située sur un côté avant de la plaque de bras longitudinale (705) par le biais d'un accouplement ; une direction axiale de la vis-mère de rotation synchrone (707) est cohérente avec une direction en longueur de la plaque de bras longitudinale (705) ; la vis-mère de rotation synchrone (707) est munie d'un écrou de vis-mère (708) coulissant verticalement ; une plaque de positionnement en hauteur dans une direction cohérente avec une direction en longueur de la vis-mère de rotation synchrone (707) est prévue sur la plaque de bras longitudinale (705) ; l'écrou de vis-mère (708) est muni d'un crochet de support de transfert de microplaque et d'un capteur de position d'écrou (709) qui est adapté à la plaque de positionnement en hauteur ; le crochet de support de transfert de microplaque comprend un bras en porte-à-faux de transfert de microplaque (715) qui est relié de manière fixe à l'écrou de vis-mère (708) et s'étend horizontalement vers l'avant ; un crochet de transfert de microplaque (716) s'associant à l'ouverture de porte d'entrée (516) est fixé horizontalement sur le bras en porte-à-faux de transfert de microplaque (715) ; un capteur de position de crochet (717) est prévu sur un côté du crochet de transfert de microplaque (716).

11. Système d'identification de micro-organismes entièrement automatique et d'analyse de sensibilité aux médicaments selon la revendication 2 ou 3, **caractérisé en ce que** le moyen de support de microplaque comprend une base de support (224) ; un axe de rotation (226) entraîné par un moteur d'entraînement de plaque de base (225) pénètre verticalement dans la base de support (224) ; une extrémité supérieure de l'axe de rotation (226) est reliée de manière fixe à un centre d'une surface inférieure d'une plaque de base de support (227) agencée horizontalement ; deux assemblages de support de microplaque sont fixés côte à côte sur la plaque de base de support (227) ; chaque assemblage de support de microplaque comprend un ensemble de râteliers de support de microplaque (228) et un ensemble de râteliers de serrage de couvercle de microplaques (229) ; une hauteur du râtelier de serrage de couvercle de microplaque (229) est supérieure à une hauteur du râtelier de support de microplaque (228) ; les râteliers de support de microplaque (228) et les râteliers de serrage de couvercle de microplaque (229) de chacun des deux assemblages de support de microplaque sont décalés.

12. Système d'identification de micro-organismes entièrement automatique et d'analyse de sensibilité aux médicaments selon la revendication 11, **caractérisé en ce que** le moyen de montage/démontage de pointe de pipette comprend un panier de pointes de pipette mises au rebut (234) prévu sur un côté avant du moyen de support de microplaque ; une boîte de stockage de pointes de pipette mises au rebut (235) ressorties ou introduites à partir d'un côté avant du boîtier entier (1) est prévue dans le panier de pointes de pipette mises au rebut (234) ; une ouverture de chute de pointes de pipette (236) est prévue sur une paroi de dessus du panier de pointes de pipette mises au rebut (234) ; une table de support (238) présentant une surface supérieure munie de la boîte de logement de pointes de pipette (237) est prévue au-dessus de l'ouverture de chute de pointes de pipette (236) ; la table de support (238) est munie d'une ouverture d'enlèvement de pointes de pipette en forme de gourde (239) correspondant à l'ouverture de chute de pointes de pipette (236).

13. Système d'identification de micro-organismes entièrement automatique et d'analyse de sensibilité aux médicaments selon la revendication 2 ou 3, **caractérisé en ce que** le moyen de montage/démontage de pointe de pipette comprend un panier de pointes de pipette mises au rebut (234) prévu sur un côté avant du moyen de support de microplaque ; une boîte de stockage de pointes de pipettes mises au rebut (235) ressorties ou introduites à partir d'un côté avant du boîtier entier (1) est prévue dans le panier de pointes de pipette mises au rebut (234) ; une ouverture de chute de pointes de pipette (236) est prévue sur une paroi de dessus du panier de pointes de pipette mises au rebut (234) ; une table de support (238) présentant une surface supérieure munie de la boîte de logement de pointes de pipette (237) est prévue au-dessus de l'ouverture de chute de pointes de pipette (236) ; la table de support (238) est munie d'une ouverture d'enlèvement de pointes de pipette en forme de gourde (239) correspondant à l'ouverture de chute de pointes de pipette (236).

14. Système d'identification de micro-organismes entièrement automatique et d'analyse de sensibilité aux médicaments selon l'une quelconque des revendications 1 à 10, **caractérisé en ce que** l'unité d'ajout d'échantillon (2), l'unité d'identification et d'enregistrement d'échantillon (3), l'unité de port de microplaque (4), l'unité d'incubation (5), l'unité de test (6) et l'unité de transfert de microplaque (7) sont commandées séparément par un moyen de commande de logique programmable, *programmable logic controller* - PLC.
